# EUROPÄISCHE PATENTSCHRIFT

(11) **EP 3 942 683 B1**
(45) Veröffentlichungstag und Bekanntmachung des Hinweises auf die Patenterteilung: **25.02.2026**
(21) Anmeldenummer: 20712949.5
(22) Anmeldetag: 19.03.2020
(51) Int. Cl.: H02M 1/088, H02M 7/00, H02M 7/219, H02M 7/5387, H02M 7/797

(54) **FLEXIBEL KONFIGURIERBARE STROMRICHTERANORDNUNG UND VERFAHREN ZUM KONFIGURIEREN EINER STROMRICHTERANORDNUNG**
FLEXIBLY CONFIGURABLE CONVERTER AND METHOD OF CONFIGURATION
CONVERTISSEUR CONFIGURABLE FLEXIBLE ET PROCÉDÉ DE CONFIGURATION

(30) Priorität: 21.03.2019 DE 102019203896
(43) Veröffentlichungstag der Anmeldung: 26.01.2022
(73) Patentinhaber: ALSTOM Holdings, 93400 Saint-Ouen-sur-Seine (FR)
(72) Erfinder: LAUDAN, Adrian, 8107 Buchs ZH (CH); SCHWICHTENBERG, Klaus, 79793 Wutöschingen (DE); BOHLIN, Henrik, 735 32 Surahammar (SE)
(74) Vertreter: Patentanwälte Bressel und Partner mbB
(86) Internationale Anmeldenummer: PCT/EP2020/057655
(87) Internationale Veröffentlichungsnummer: WO 2020/188045

(56) Entgegenhaltungen:
- EP-A2- 1 148 622
- WO-A1-2018/103125
- DE-A1- 102013 220 940
- DE-A1- 102016 217 494
- DE-A1- 102017 212 829
- US-A1- 2004 155 640
- US-A1- 2011 309 776
- US-A1- 2017 093 303
- RYAN SCHNELL: "Powering the Isolated Side of Your Half-Bridge Configuration", TECHNICAL ARTICLE MS-2663-1, 1 January 2014 (2014-01-01), pages 1 - 4, XP055579219, Retrieved from the Internet <URL:https://www.analog.com/media/en/technical-documentation/tech-articles/Powering-the-Isolated-Side-of-Your-Half-Bridge-Configuration-MS-2663-1.pdf> [retrieved on 20190409]

## Beschreibung

Die Erfindung betrifft eine flexibel konfigurierbare Stromrichteranordnung und ein Verfahren zum Konfigurieren einer Stromrichteranordnung.

Stromrichteranordnungen werden in vielfältigen technischen Zusammenhängen eingesetzt. Sie können entweder als Wechselrichter (d.h. als Inverter) ausgebildet sein, also Gleichstrom in Wechselstrom wandeln, oder als Gleichrichter, also Wechselstrom in Gleichstrom wandeln. Es ist bekannt, in diesem Zusammenhang Halbleitertransistoren z.B. in Halbbrückenschaltungen zu verwenden, wobei die Halbleitertransistoren über geeignete Steuersignale gezielt aktivierbar sind, um die gewünschte Stromrichtfunktion zu erreichen (d.h. gezielt geöffnet und gesperrt oder, mit anderen Worten, gezielt ein- und ausgeschaltet werden können). Die Halbleitertransistoren können einzeln oder in Mehrzahl in Schaltmodulen (oder, mit anderen Worten, in Halbleitermodulen) zusammengefasst sein.

Derzeit verfügbare Halbleitertransistoren sind jedoch nicht für sämtliche Leistungsklassen und insbesondere nicht für hohe elektrische Leistungen geeignet, wie sie z.B. in Traktionssystemen für Schienenfahrzeuge benötigt werden. Es existieren deshalb Lösungen, bei denen Schaltmodule z.B. in Form von Halbbrückenmodulen, die zwei zu einer Halbrücke geschaltete Halbleitertransistoren umfassen, parallel geschaltet und auch zeitgleich angesteuert werden, um die gewünschte Stromrichtfunktion bei einer höheren elektrischen Leistung bereitzustellen. Derartige Halbbrückenmodule werden auch als Dual-Halbleitermodule bezeichnet.

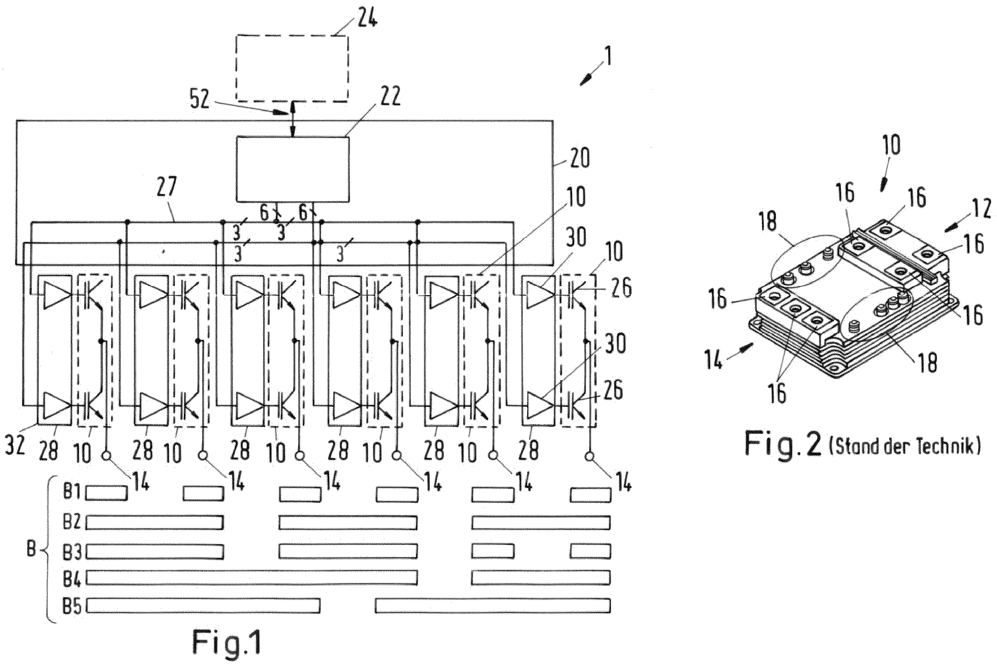

Bezugnehmend auf Fig. 2 wird ein bekanntes Beispiel eines derartigen Halbbrückenmoduls 10 bzw. Dual-Halbleitermodule "LV100" erläutert, das von verschiedenen Anbietern am Markt erhältlich ist. Dieses oder vergleichbare Module werden seitens der Hersteller auch als ein Hochvolt-IGBT-Modul bezeichnet. Eine schematische Darstellung des inneren Aufbaus eines solchen Moduls 10 wird nachstehend anhand von Fig. 1 erläutert. Das Modul 10 ist zur Verwendung in einem Wechselrichter oder Gleichrichter vorgesehen.

In Fig. 2 erkennt man, dass das Halbbrückenmodul 10 an seiner dem Betrachter zugewandten Oberseite verschiedene Anschlüsse bzw. Kontaktierungsmöglichkeiten umfasst. Insbesondere erkennt man einen ersten Anschlussbereich 12 für Gleichspannung und einen zweiten Anschlussbereich 14 für Wechselspannung, wobei die Anschlussbereiche an gegenüberliegenden Seiten des Halbbrückenmoduls 10 ausgebildet sind. Die Anschlussbereiche 12, 14 umfassen jeweils eine Mehrzahl von rund dargestellten Aufnahmeöffnungen 16 für korrespondierende Kontaktierungsstecker. Die Aufnahmeöffnungen 16 können auch als Anschlüsse oder Anschlussklemmen bezeichnet werden oder als solche realisiert sein. Die Aufnahmeöffnungen 16 im zweiten Anschlussbereich 14 für Wechselspannung sind parallelgeschaltet (d.h. an jeder Aufnahmeöffnungen 16 liegt die gleiche Wechselspannungsphase an). Im ersten Anschlussbereich 12 für Gleichspannung sind hingegen jeweils zwei der Aufnahmeöffnungen 16 bzw. Anschlüsse parallelgeschaltet (zwei für das positive und zwei für das negative Potential). Mittels des Halbbrückenmoduls 10 kann also Gleichspannung in eine einphasige Wechselspannung umgerichtet werden oder Wechselspannung in Gleichspannung. Alternative Dual-Halbleitermodule, die unter den Bezeichnungen NHPD2, HV100 oder XHP3 vertrieben werden, können insbesondere hinsichtlich der Anschlussbereich abweichen.

An der Oberseite des Halbbrückenmoduls 10 finden sich mehrere weitere Anschlüsse 18, die z.B. zum Anschließen von einer nachstehend erläuterten Treibereinheit vorgesehen sind.

Mit einem derartigen Halbbrückenmodul 10 ergeben sich vielfältige Möglichkeiten, um eine Stromrichteranordnung aufzubauen. Beispielsweise können drei derartige Halbbrückenmodule 10 derart betrieben werden, dass jedes eine einzelne Wechselstromphase erzeugt, um einen dreiphasigen Wechselrichter zu bilden. Ebenso können aber wenigstens zwei derartige Halbbrückenmodule 10 parallelgeschaltet werden, um eine gemeinsame Wechselstromphase auf einem entsprechend erhöhten Leistungsniveau zu erzeugen. Gemäß einer Zweipunktschaltung kann dabei das Stromniveau erhöht werden. Gemäß einer Drei- oder Mehrpunktschaltung kann die Spannung und ggf. auch der Strom erhöht werden.

Wird eine Mehrzahl von Halbbrückenmodulen 10 innerhalb einer Stromrichteranordnung verwendet, sind zudem verschiedene Ansätze bekannt, um Treiberschaltungen für die einzelnen Halbbrückenmodule 10 bereitzustellen. Diese Ansätze lassen sich auch auf allgemeine Schaltmodule übertragen, führen dort aber zu vergleichbaren Nachteilen.

Zum einen existiert der Ansatz, jedes Halbbrückenmodul 10 mit einer eigenen Treiberschaltung zu versehen (auch als single GDU (Gate Drive Unit) bezeichnet). Die Treiberschaltungen können dann jeweils mit einer zentralen (Steuer-) Signalerzeugungseinheit verbunden werden (auch Drive Control Unit genannt). Dies kann auch als eine verteilte Treiberarchitektur oder allgemein als ein verteilter Ansatz bezeichnet werden. Nachteilig ist in diesem Fall, dass je nachdem, welche Halbbrückenmodule 10 parallelgeschaltet werden sollen, Hardwareanpassungen von z.B. einer Leiterplatte, die die Drive Control Unit mit den einzelnen Treiberschaltungen verbindet, erforderlich sind. Insbesondere muss in diesem Fall von vornherein festgelegt werden, welche der Halbbrückenmodule 10 parallelgeschaltet werden und für diese parallel geschalteten Module 10 muss wenigstens eine gemeinsame Speise- und Kommunikationseinheit bereitgestellt werden, welche eine Verbindung zu einer übergeordneten Leittechnik ermöglicht und Signale an die einzelnen parallelgeschalteten Halbbrückenmodule 10 bzw. deren Treiberschaltungen leitet. Dies erhöht die Anzahl erforderlicher Hardwarekomponenten und somit die Kosten. Sollen aus Standardisierungsgründen immer die gleichen Speise- und Kommunikationseinheiten verwendet werden, können diese überdimensioniert sein, da sie Fälle von 1...n parallelgeschalteten Modulen abdecken bzw. versorgen können müssen (d.h. für den Fall von z.B. lediglich einem oder zwei zu versorgenden Modul(en) wären sie überdimensioniert).

Dies erhöht die Anzahl erforderlicher Hardwarekomponenten und somit die Kosten, insbesondere, wenn nur wenige (z.B. weniger als drei) einzelne Halbbrückenmodule 10 parallelgeschaltet werden sollen.

Alternativ existiert ein zentraler Ansatz, bei dem eine zentrale Treibereinheit für eine Mehrzahl von parallelgeschalteten Halbbrückenmodulen 10 verwendet wird. Nachteilig ist hierbei, dass für eine jede Konfiguration der Stromrichteranordnung (d.h. je nachdem, welche Halbbrückenmodule 10 parallelgeschaltet werden sollen) eine gesonderte Hardware in Form einer Leiterplatte hergestellt werden muss, welche die zentrale Treibereinheit mit den entsprechend parallelgeschalteten Halbbrückenmodulen 10 verbindet. Zudem müssten dann entweder Treibereinheiten verwendet werden, die sämtliche denkbaren Konfigurationen abdecken können (d.h. sämtliche denkbaren Anzahlen parallelgeschalteter Halbbrückenmodule 10) oder es müsste für jede konkret gewählte Konfiguration eine speziell hierfür ausgelegte Treibereinheit ausgewählt werden. Beides ist hinsichtlich der Kosten und Effizienz nachteilig.

Schließlich kann es auch schwierig sein, mittels eines solchen zentralen Ansatzes parallelgeschaltete Halbbrückenmodule 10 und genauer gesagt deren Halbleitertransistoren tatsächlich parallel anzusteuern. Als Ursachen sind etwaige Laufzeitunterschiede der Steuersignale zu den unterschiedlichen Halbbrückenmodulen 10 sowie mögliche Halbleiterstreuungen (z.B. hinsichtlich eines Durchlassspannungsabfalls) sowie lange und ggf. hoch impedante Steuerleitungen zu nennen.

Die DE 10 2013 220 940 A1 offenbart einen Wechselrichter mit parallel geschalteten Halbbrückenmodulen sowie einem die Halbleiterschalter der Halbbrückenmodule steuernden Taktgeber, der dazu eingerichtet ist, die Halbleiterschalter zum Ausbilden einer vorgebbaren elektrischen Gleichspannung an einem Ausgangsanschluss eines Filtermoduls anzusteuern. Das Filtermodul ist an den Mittenanschlüssen der Halbbrückenmodule angeschlossen.

Die DE 10 2017 212 829 A1 offenbart eine Inverter-Lader-Schaltungstopologie mit mindestens zwei parallel geschalteten B6-Brücken, an welchen die sechs Phasen mindestens einer elektrischen Maschine anschließbar sind. Jeweils drei Phasen der mindestens einen elektrischen Maschine sind sternförmig verschaltet und bilden mindestens einen ersten und einen zweiten Sternpunktanschluss aus, an die eine Ladeenergiequelle anschließbar ist.

Das am 9.4.2019 unter der URL:https://www.analog.com/media/en/technicaldocumentation/tech-articles/Powering-the-isolated-Side-of-Your-Half-Bridge-Configuration-MS-2663-1.pdf gefundene Dokument "Powering the isolated Side of Your Half-Bridge Configuration" des Autors Ryan Schnell, Technical Article MS-2663-1, 1. Januar 2014 (2014-01-01), Seiten 1-4, XP055579219, beschreibt eine Halbbrücken-Topologie in Stromrichtern.

WO 2018/103125 A1 offenbart ein Traktionsleistungsmodul umfassend: einen Rahmen, ein wassergekühltes Substrat, IGBT-Komponenten, zwei Verbundsammelschienen, Treiberplatinen, Hochspannungsverbinder und Lichtwellen-Empfänger. Das Traktionsleistungsmodul beinhaltet 4 IGBT Halbbrücken, die in zwei Kombinationen genutzt werden können. Wenn das Traktionsleistungsmodul zur Gleichrichtung verwendet wird, werden jeweils zwei der vier Halbbrücken parallel geschaltet, um als Gleichrichtereingangsenden zu dienen. Wenn das Traktionsleistungsmodul als Wechselrichter verwendet wird, dienen drei der vier Halbbrücken als AC Phasen und die verbleibende Halbbrücke als Chopper-Ausgang.

Zum Synchronisieren der Schaltungen von parallelgeschalteten Halbbrücken wird vorgeschlagen, dies entweder durch Angleichen der Signalpfade oder durch Signalverarbeitung auf der Treiberbaugruppe zu realisieren.

Eine Aufgabe der vorliegenden Erfindung ist es, das Bilden von Stromrichteranordnungen aus Schaltmodulen (wie z.B. Halbbrückenmodulen) zu erleichtern. Insbesondere sollen kostengünstige Konfigurationen von Stromrichteranordnungen aus derartigen Halbbrückenmodulen ermöglicht werden. Ferner insbesondere soll der Entwicklungs- und Absicherungsaufwand für neu zu entwickelnde Anordnungen reduziert werden.

Diese Aufgabe wird durch eine Stromrichteranordnung und ein Verfahren gemäß den beigefügten unabhängigen Ansprüchen gelöst. Vorteilhafte Weiterbildungen sind in den abhängigen Ansprüchen angegeben.

In Abweichung von dem vorstehend geschilderten verteilten und zentralen Ansatz schlägt die Erfindung vor, eine flexibel konfigurierbare Signalverteilung von Steuersignalen an Schaltmodule und insbesondere Treibereinheiten der Schaltmodule zu ermöglichen. Genauer gesagt ist vorgesehen, dass jedes Schaltmodul über eine eigene Treibereinheit verfügt, die Treibereinheiten jedoch flexibel ansteuerbar sind, und zwar mittels einer flexibel konfigurierbaren Signalverteileinheit. Je nachdem, welche der Schaltmodule z.B. für eine konkrete Anwendung parallelgeschaltet werden sollen, kann dann die Signalverteileinheit geeignet konfiguriert werden, um die entsprechend parallelgeschalteten Schaltmodule bzw. deren Treibereinheiten möglichst zeitgleich mit identischen Steuersignalen zu versorgen und zwar durch das eigenständige Durchführen eines Kalibrierverfahrens gemäß den unabhängigen Ansprüchen.

Vorteile dieser Lösung bestehen zunächst dahingehend, dass unabhängig davon, welche Treibereinheiten bzw. Schaltmodule parallelgeschaltet werden sollen, stets die gleiche Hardware verwendet werden kann. Insbesondere müssen keine Leiterplatten gesondert angepasst werden und/oder gesonderte Kommunikations- und Speiseeinheiten nach Maßgabe der parallelgeschalteten Schaltmodule ergänzt werden. Stattdessen kann die Signalverteileinheit mit sämtlichen Treibereinheiten über eine gleichbleibende Hardware verbunden sein und je nach den gewünschten Parallelschaltungen kann lediglich die Signalverteilung an die Treibereinheiten geeignet angepasst werden.

Es versteht sich, dass hierdurch auch die Kosten reduziert werden können, insbesondere da die Anzahl erforderlicher Komponenten (siehe zum Beispiel obige Speise- und Kommunikationseinheiten) verringert werden kann. Bildlich gesprochen ermöglicht die Erfindung stattdessen das Herstellen einer weitestgehend gleichbleibenden und bevorzugt vollständig vorfabrizierten Einheit, die dann durch eine Programmierung einer Signalverteileinheit an einen gewünschten konkreten Anwendungszweck angepasst wird. Dadurch, dass die Treibereinheiten dennoch je Schaltmodul vorgesehen sind, können diese auch in geringer Nähe zu den entsprechenden Modulen positioniert werden und insbesondere zu deren Halbleitertransistoren. Dies ermöglicht eine allgemein bevorzugte halbleiternahe Ansteuerung, bei der die Impedanz sowie Laufzeiten und/oder Laufzeitunterschiede reduziert werden. Durch das Vorsehen von Treibereinheiten je Schaltmodul können diese auch optimal für das entsprechende Schaltmodul ausgelegt werden. Insbesondere müssen diese nicht dazu eingerichtet sein, mehrere mögliche Konfigurationen von einzeln oder parallelgeschalteten Schaltmodulen abzudecken.

Durch die erfindungsgemäß ermöglichte gleichbleibende Hardware trotz flexibel anpassbarer Parallelschaltungen der Module kann auch der Verbindungsaufwand reduziert werden, da zahlreiche oder sogar sämtliche Leitungen in bzw. mittels Leiterplatten bereitgestellt werden können. Mittels derartiger Leiterplatten (insbesondere mittels einer zusätzlichen den Treibern übergeordneten Leiterplatte) wird auch eine galvanische Trennung zwischen den einzelnen Leitungen und somit Schaltmodulen ermöglicht, sodass diese individuell ansteuerbar sind. Dies ermöglicht beispielsweise ein Betreiben einer entsprechenden Stromrichteranordnung bzw. der darin vorhandenen Schaltmodule in Zwei- oder Dreipunktschaltung.

Schließlich wird auch eine höhere Flexibilität bezüglich einem Verbinden der Signalverteileinheit mit (Steuer-) Signalerzeugungseinheiten ermöglicht. Zum einen ermöglicht die Signalverteileinheit eine Signalverteilung auf eine Mehrzahl von Treibereinheiten und insbesondere auf eine höhere Anzahl von Treibereinheiten als Eingangskanäle zur Verfügung stehen. Beispielsweise kann ein Eingangssignal gemäß einem seriellen Kommunikationsprotokoll erstellt werden (zum Beispiel als Lichtwellensignal bzw. als eine Lichtpulsfolge) und ggf. nur über einen einzigen Eingangskanal an die Signalverteileinheit übermittelt werden. Die Signalverteileinheit kann dann die in dem Eingangssignal entsprechend (seriell) codierten Steuersignale für die einzelnen Treibereinheiten entschlüsseln bzw. herauslösen und über eine Mehrzahl von Signalleitungen an die entsprechenden Treibereinheiten verteilen.

Zudem ist es auch möglich, die Signalerzeugungseinheiten selbst weniger komplex auszubilden und/oder zu vermeiden, dass diese über Informationen hinsichtlich der Verbindungen und/oder Topologie der Treibereinheiten verfügen müssen. Diese Aufgabe kann stattdessen von der Signalverteileinheit übernommen werden, welche zum Beispiel über Informationen verfügen kann, welche Treibereinheiten über welche Signalleitungen ansteuerbar sind.

Die Stromrichteranordnung ist als Wechselrichter konfiguriert. Bevorzugt ist sie für den Einsatz in einem Fahrzeug wie z.B. einem Schienenfahrzeug eingerichtet. Gemäß einer Variante ist die Stromrichteranordnung für den Hochvoltbereich von einem Schienenfahrzeug vorgesehen. Übergeordnet kann die Stromrichteranordnung jedoch für Niederspannungen ausgelegt sein und beispielsweise Wechselspannungen unterhalb von einem Kilovolt erzeugen.

Bei den Schaltmodulen handelt es sich um Halbbrückenmodule und insbesondere um ein Halbbrückenmodul der in Fig. 2 gezeigten Art. Insbesondere kann es sich um ein Hochvolt-Schaltmodul und insbesondere Hochvolt-Halbbrückenmodul handeln, das in einem Hochvoltnetz von z.B. einem Schienenfahrzeug zum Einsatz kommt. Ein Schaltmodul kann in dieser Offenbarung auch lediglich als Modul bezeichnet werden. Alternativ kann ein Halbbrückenmodul auch als Dual-Halbleiter, Dual-Halbleitergehäuse und/oder als Dual-Halbleiterventil bezeichnet werden. Ein Schaltmodul kann allgemein eine baulich integrierte Einheit sein und separat von anderen Komponenten der Stromrichteranordnung handhabbar und innerhalb der Stromrichteranordnung positionierbar sein. Ein Schaltmodul weist eine Mehrzahl von Halbleitertransistoren auf. Gemäß einer bevorzugten Variante sind die Schaltmodule benachbart zueinander und insbesondere entlang einer gemeinsamen Linie und/oder Achse positioniert. Mit anderen Worten können die Schaltmodule aneinandergereiht angeordnet werden. Bevorzugt erfolgt dies in einer solchen Weise, dass auch Anschlussbereiche der Module, wie ein erster Anschlussbereich für Gleichspannung- und/oder ein zweiter Anschlussbereich für Wechselspannung, entsprechend aneinandergereiht sind. Dies vereinfacht das Verbinden der Module mit weiteren Komponenten, wie mit einer Stromversorgung und/oder einem Verbraucher. Eine solche Verbindung kann z.B. über leistenartige Elemente erfolgen, welche für die aneinandergereihten Module bzw. deren Anschlussbereiche in geeigneten Abständen Kontaktelemente wie z.B. Klemmen oder Stecker umfassen.

Bei den Halbleitertransistoren kann es sich um gleichartige Transistoren je Modul handeln, die, sofern es sich um Halbbrückenmodule handelt, jeweils zu einer Halbbrücke verschaltet sind. Als Beispiele sind IGBTs (insbesondere siliziumbasierte IGBTs (Si IGBT)) zu nennen, Siliziumkarbid-Dioden (SiCH) oder komplette Lösungen mit Siliziumkarbidchips (SiC).

Die Treibereinheit kann je Halbleitertransistor eine gesonderte (Unter-)Treibereinheit umfassen. Letztere werden hierin auch als Treiberschaltung bezeichnet. In an sich bekannter Weise kann die Treibereinheit (bzw. deren Treiberschaltungen) dazu eingerichtet sein, eine Gate-Ansteuerung der Halbleitertransistoren nach Maßgabe erhaltener Steuersignale durchzuführen. Hierfür kann sie die erhaltenen Steuersignale in geeigneter Weise elektrisch übersetzen und/oder verstärken, um die Gate-Ansteuerung vornehmen zu können.

Bei der Signalverteileinheit handelt es sich um eine Einheit, die von einer separaten Signalerzeugungseinheit erzeugte Steuersignale verteilt. Dies kann auch umfassen, dass die Signalverteileinheit die erhaltenen Steuersignale zunächst in ein geeignetes Format umwandelt oder umrechnet, beispielsweise um aus erhaltenen lichtwellenleitergebundenen Schaltpulsen und/oder gemäß einem Protokoll erstellten Eingangssignalen Schaltsignale für die Treibereinheiten zu erzeugen. Anders ausgedrückt kann die Signalverteileinheit auch dazu eingerichtet sein, von einer anderen Einheit erzeugte Schaltsignale zu entschlüsseln und/oder umzuwandeln und diese entschlüsselten bzw. umgewandelten Signale dann als Steuersignale an die Treibereinheiten zu verteilen.

Allerdings ist es in diesem Zusammenhang bevorzugt, wenn die in den erhaltenen Eingangssignalen ursprünglich definierten bzw. codierten Schaltsequenzen oder, mit anderen Worten, Schaltabfolgen beibehalten und nicht durch die Signalverteileinheit verändert werden. Bildlich gesprochen kann die Signalverteileinheit also dazu eingerichtet sein, inhaltlich unveränderte Steuersignale (z.B. unverändert hinsichtlich der hiervon definierten Schaltsequenzen der Halbleitertransistoren bzw. Treibereinheiten) aus den erhaltenen Eingangssignalen zu erzeugen. Die Eingangssignale können Lichtwellensignale und/oder gemäß vordefinierter Protokolle erzeugte Signale sein.

Hingegen ist die Signalverteileinheit dazu eingerichtet, Laufzeitunterschiede von Steuersignalen zu kompensieren (zum Beispiel durch Verzögern einzelner Steuersignale) und damit parallel geschaltete Halbleitertransistoren synchron einzuschalten, bevorzugt aber ohne die von den Steuersignalen vorgegebene Schaltsequenz zu beeinflussen (d.h. die angesteuerten Halbleitertransistoren schalten gemäß der vorgegeben Soll-Schaltfrequenz dann tatsächlich ein und aus, auch wenn die Steuersignale aufgrund der Laufzeitkompensation ggf. leicht zeitlich zueinander versetzt sind).

Die "gleichartigen Steuersignale" können also allgemein als Steuersignale verstanden werden, die in gleichartigen und insbesondere synchronen Schaltvorgängen der angesteuerten Schaltmodule und/oder Treibereinheiten und/oder Halbleitertransistoren resultieren. Der Begriff "gleichartig" richtet sich also primär auf die mittels der Steuersignale erzielbare "gleichartige" Wirkung. Im Fall vernachlässigbarer Laufzeitunterschiede können die Steuersignale zum Erreichen der gleichartigen und insbesondere synchronen Schaltvorgänge identisch sein. Im Fall signifikanter Laufzeitunterschiede kann dies über die hierin geschilderte Laufzeitkompensation erreicht werden.

Bei den verteilten Steuersignalen handelt es sich mit anderen Worten um Kontrollsignale oder Schaltsignale für die Treibereinheiten bzw. Halbleitertransistoren. Nach Maßgabe dieser Steuersignale werden die Halbleitertransistoren (infolge einer entsprechenden Ansteuerung) durch die Treibereinheiten ein- und ausgeschaltet und wird hierdurch die gewünschte Stromrichterfunktion bereitgestellt.

Die Signalverteileinheit kann über individuelle Leitungen mit den Treibereinheiten verbunden sein (d.h. wenigstens eine Leitung je Treibereinheit aufweisen, wobei diese Leitung mit keiner weiteren Treibereinheit verbunden ist). Diese Leitungen können als Leiterbahnen realisiert sein, insbesondere als Leiterbahnen einer Leiterplatte. Die Signalverteileinheit kann ebenfalls auf dieser Leiterplatte angeordnet und mit den Leiterbahnen verbunden sein. Die Leiterbahnen (oder allgemein die Leitungen zu den Treibereinheiten) können galvanisch voneinander isoliert sein (bspw. mittels entsprechender Zwischenräume auf der Leiterplatte und genauer gesagt Isolationsbarrieren (zum Beispiel mittels Funktionsisolation). Einige galvanische Trennung kann auch durch kapazitive, induktive, funkbasierte oder optische Signaleinkopplung oder Signalübertragung ermöglicht werden. Die Treibereinheiten können ebenfalls auf dieser Leiterplatte angeordnet sein. Es ist jedoch bevorzugt, dass die Treibereinheiten separat von dieser Leiterplatte und bevorzugt möglichst nahe am Halbleitermodul angeordnet sowie z.B. mit der entsprechenden Leiterplatte lediglich signalleitend verbunden sind. Beispielsweise können die Treibereinheiten jeweils als separate Baugruppen und/oder als auf wenigstens einer separaten Leiterplatte angeordnete Komponente realisiert sein. Über z.B. Steckverbindungen oder vergleichbare Anschlüsse können Sie dann mit der Leiterplatte der Signalverteileinheit verbunden werden.

Die flexible Konfigurierbarkeit der Stromrichteranordnung kann umfassen, dass wenigstens zwei Möglichkeiten bestehen, um Kombinationen von Treibereinheiten festzulegen, an die gleichartige Steuersignale verteilbar sind, wobei sich diese Kombinationen voneinander unterscheiden. Beispielsweise können bei wenigstens drei Schaltmodule ein erstes und zweites hiervon kombiniert werden oder ein zweites und drittes und das jeweils verbleibende Modul kann kein Bestandteil der gebildeten Kombination sein.

Die Kombinationen von Treibereinheiten sind aufgrund der Verteilung gleichartiger Steuersignale gleichbedeutend damit, dass die entsprechenden Treibereinheiten bzw. die dazugehörigen Schaltmodule parallelgeschaltet werden. Wird also im Folgenden auf eine Parallelschaltung von Schaltmodulen Bezug genommen, ist dies gleichbedeutend damit, dass diese eine Kombination im Sinne der Erfindung bilden (und umgekehrt).

Die Kombinationen können bei einer erstmaligen Konfiguration und/oder Herstellung der Stromrichteranordnung festgelegt werden. Beispielsweise kann bei einem Hersteller der Stromrichteranordnung die Signalverteileinheit einmalig konfiguriert werden und somit die Stromrichteranordnung mit einer bestimmten Anzahl parallelgeschalteter Treibereinheiten ausgeliefert werden. Zusätzlich ist es aber auch möglich, nach erfolgter Auslieferung und insbesondere mehrfach entsprechende Kombinationen (neu) bilden zu können. Die Stromrichteranordnung ist also mehrfach konfigurierbar. Anders ausgedrückt ist erfindungsgemäß eine mehrfache Konfigurierbarkeit der Signalverteileinheit vorgesehen.

Gemäß den Ansprüchen wird eine Konfiguration per Programmierung der Signalverteileinheit vorgenommen. In diesem Fall kann die Signalverteileinheit bereits mit sämtlichen Treibereinheiten durch entsprechende Leitungen (Signalleitung) verbunden sein und die Programmierung kann definieren, über welche Leitungen welche Steuersignale übermittelt werden sollen und insbesondere über welche Leitungen gleichartige Steuersignale zu übermitteln sind.

Für eine solche Programmierung kann die Signalverteileinheit wenigstens einen von einem Mikroprozessor, einer Speichereinrichtung oder einem Computerchip umfassen. Wie nachstehend erläutert, kann die Signalverteileinheit allgemein eine programmierbare Komponenten oder, mit andere Worten, einen programmierbaren Baustein umfassen, insbesondere einen FPGA (Field Programmable Gate Array) oder einen vergleichbaren integrierten Schaltkreis (z.B. einen programmierbaren Multiplexer oder (insbesondere für aber nicht beschränkt auf den Fall einer Laufzeitkompensation) ein CPLD (complex programmable logic device), ASiC (application-specific integrated circuit), DSP (digitaler Signalprozessor) oder Mikrocontroller.

Unter gleichartigen Steuersignalen kann insbesondere verstanden werden, dass auf Basis dieser Steuersignale eine gleichartige und insbesondere identische Schaltfrequenz bzw. Ein- und Ausschaltfrequenz der Halbleitertransistoren erzielbar sind bzw. die Treibereinheiten auf Basis dieser Steuersignale dazu veranlassbar sind, entsprechende Schaltfrequenzen vorzugeben und/oder umzusetzen. Erfindungsgemäß kann also vorgesehen sein, verschiedene Kombinationen von Treibereinheiten zu definieren und an diese Treibereinheiten Steuersignale (d.h. "gleichartige Steuersignale) zu senden, die in gleichartigen Schaltfrequenzen dieser Treibereinheiten und/oder der hiermit verbundenen Halbleitertransistoren resultieren. Dies hat zur Folge, dass die Treibereinheiten und somit die Schaltmodule auch gleichartig betrieben und somit parallelgeschaltet werden können.

Allgemein können die gleichartigen Steuersignale unmittelbar gleichartige Schaltfrequenzen oder, genauer gesagt, auf gleiche Zeitpunkte bezogene Ein- und Ausschaltvorgänge für die Treibereinheiten bzw. die hiervon angesteuerten Halbleitertransistoren definieren, insbesondere, wenn Laufzeitunterschiede zu vernachlässigen sind oder nicht berücksichtigt werden sollen. Es ist aber ebenso möglich, dass die Steuersignale leicht versetzte Schaltfrequenzen definieren, um nachstehend erläuterte Laufzeitunterschiede auszugleichen. Beiden Varianten (auf gleichen Zeitpunkt bezogen oder leicht versetzt) ist aber gemein, das die gleichartigen Steuersignale der Kombinationen im Wesentlichen oder vollständig gleichartige Ein- und Ausschaltvorgänge der Treibereinheiten bzw. der damit verbundenen Halbleitertransistoren bewirken können. Folglich können sie zumindest hinsichtlich ihrer erzielbaren Wirkung als gleichartig bezeichnet werden. Diese Wirkung kann als eine parallele Ansteuerbarkeit der Treibereinheiten bzw. der damit verbundenen Halbleitertransistoren bezeichnet werden.

Zusammengefasst können unter gleichartigen Steuersignalen Signale verstanden werden, die bei entsprechend kombinierten Treibereinheiten zu gleichartigen Schaltvorgängen führen, wobei dies insbesondere gleiche Schaltzeitpunkte betrifft. Die Schaltzeitpunkte sowie allgemein eine gute Symmetrierung der Ansteuerung beziehen sich insbesondere auf den Laststrom.

Dadurch, dass mittels der Signalverteileinheit flexibel konfigurierbar ist, welche der Treibereinheiten kombiniert und parallelgeschaltet sowie folglich gleichartig angesteuert werden, kann eine flexible Konfiguration der Stromrichteranordnung ohne substantielle Hardwareänderungen ermöglicht werden. Damit einhergehende Vorteile wurden vorstehend bereits erläutert.

Eine Weiterbildung der Vorrichtung und des Verfahrens sieht vor, dass die Stromrichteranordnung einen Gleichspannungsanschlussbereich und einen Wechselspannungsanschlussbereich umfasst; und die Schaltmodule jeweils über einen ersten Anschlussbereich (der Schaltmodule) mit einem vom Gleichspannungsanschlussbereich und Wechselspannungsanschlussbereich elektrisch verbunden sind; und über einen zweiten Anschlussbereich (der Schaltmodule) jeweils mit dem entsprechend anderen von Gleichspannungsanschlussbereich und Wechselspannungsanschlussbereich elektrisch verbunden sind.

Bildlich gesprochen können die Schaltmodule somit zwischen dem Gleichspannungsanschlussbereich und dem Wechselspannungsanschlussbereich positioniert sowie jeweils hiermit verbunden sein. Hierfür können sie über mit dem Gleichspannungs- und Wechselspannungsanschlussbereich zusammenwirkende Anschlussbereiche verfügen (siehe obige erste und zweite Anschlussbereiche). Bei dem Gleichspannungs- und/oder Wechselspannungsanschlussbereich kann es sich um einen leistenartigen und/oder linienförmigen Anschlussbereich handeln, sodass die Schaltmodule entlang dieses Anschlussbereichs aneinandergereiht werden können. Der Gleichspannungsanschlussbereich und Wechselspannungsanschlussbereich können zueinander gegenüberliegend positioniert sein und die Schaltmodule können zwischen diesen Anschlussbereichen positioniert und insbesondere entlang der Anschlussbereiche aneinandergereiht sein. Das Anschließen der Schaltmodule kann allgemein derart erfolgen, dass auch die Halbleitertransistoren und/oder die Treibereinheiten jeweils mit dem Gleichspannungsanschlussbereich und dem Wechselspannungsanschlussbereich elektrisch verbunden sind, beispielsweise über entsprechend erste und zweite Anschlussbereiche der jeweiligen Komponenten.

Die vorstehend genannten Varianten zum Anschließen der Schaltmodule an die verschiedenen Anschlussbereiche der Stromrichteranordnung ermöglichen eine kompakte Gestaltung und einfache Montage.

Gemäß den Ansprüchen ist die Signalverteileinheit der Stromrichteranordnung zum Festlegen einer jeweiligen Kombination programmierbar bzw. wird die Signalverteileinheit in dem Verfahren zum Festlegen einer jeweiligen Kombination programmiert. Es ist mehrfache Programmierbarkeit vorgesehen. Hierfür kann die Stromrichteranordnung über geeignete Schnittstellen zu einer Programmiervorrichtung, wie z.B. einem herkömmlichen PC, verfügen. Allgemein kann eine Programmierung der Signalverteileinheit mittels Lichtsignalen oder elektrischen Signale erfolgen. Durch eine Programmierung können die verschiedenen Kombinationen je nach Anwendungsfall der Stromrichteranordnung aufwandsarm vorgegeben werden und die Stromrichteranordnung somit flexibel und schnell an das gewünschte Einsatzszenario angepasst werden. Weitere Erläuterung zu einer etwaigen Programmierbarkeit der Signalverteileinheit finden sich vorstehend.

Wie erwähnt, kann die Signalverteileinheit einen FPGA umfassen. Dies stellt eine günstige, zuverlässige und einfach zu programmierende Variante dar, um die Kombinationen der Treibereinheiten festzulegen oder, mit anderen Worten, um die Einzel- oder Individuell- und/oder zusammengehörende oder Parallelschaltung von Steuersignalen für die Schaltmodule zu definieren.

Gemäß einer weiteren Ausführungsform der Stromrichteranordnung und des Verfahrens umfasst die Stromrichteranordnung einen Schnittstellenbereich, über den die Signalverteileinheit mit wenigstens einer Steuersignalerzeugungseinheit (z.B. einer sogenannten Drive Control Unit) verbindbar ist. Der Schnittstellenbereich kann als ein Anschlussbereich ausgebildet sein, an den die Steuersignalerzeugungseinheit selektiv und insbesondere zerstörungsfrei lösbar anschließbar ist z.B. mittels elektrischen Kontaktsteckern oder Lichtleitungssteckern. Alternativ kann der Schnittstellenbereich einen Bereich der Stromrichteranordnung umfassen oder bilden, der mit Leitungen zu einer Steuersignalerzeugungseinheit verlötetet oder anderweitig dauerhaft verbunden ist. Dieser Schnittstellenbereich ist vorzugsweise auch mit der Signalverteileinheit verbunden (beispielsweise über die Leiterbahnen einer gemeinsamen Leiterplatte). Der Schnittstellenbereich kann also allgemein eine zerstörungsfrei lösbare oder eine dauerhafte Verbindung ermöglichen.

Im Einklang mit den Patentansprüchen ist bezüglich der Stromrichteranordnung und des Verfahrens vorgesehen, dass die Signalverteileinheit dazu eingerichtet ist, bei dem Verteilen der Steuersignale eine Signallaufzeit (d.h. die zur Signalübermittlung benötigte Zeitdauer) zwischen der Signalverteileinheit und den Treibereinheiten und optional auch eine Halbleitertransistor-Reaktionszeit (insbesondere IGBT-Reaktionszeit) zu berücksichtigen. Hierauf basierend können Aussende- bzw. Verteilzeitpunkte der Steuersignale angepasst werden. Ein Berücksichtigen der Signallaufzeiten kann daher derart erfolgen, dass gleichartige Steuersignale an parallelgeschaltete Treibereinheiten zeitversetzt versendet werden, wobei der Zeitversatz in Abhängigkeit bzw. entsprechend der unterschiedlichen Signallaufzeiten zu den kombinierten Treibereinheiten gewählt ist (insbesondere in Abhängigkeit einer Differenz hiervon). Es werden hierfür Informationen über Signallaufzeiten zu einzelnen Treibereinheiten vorab ermittelt und hinterlegt, nämlich im Rahmen eines Kalibrierverfahrens. Es ist zu berücksichtigen, dass nicht nur die Signallaufzeiten zu einzelnen Treibereinheiten berücksichtigt werden können, sondern auch zu jeweils typischerweise mindestens zwei etwaigen einzelnen Treiberschaltungen und/oder Halbleitertransistoren (insbesondere IGBT) der Treibereinheiten. Vorstehende Fälle sind insbesondere relevant in der Parallelschaltung zum Erreichen eines zeitgleichen Schaltens des Halbleiters auf Leistungsseite.

Im Rahmen einer Kalibration werden Schaltsignale von der Signalverteileinheit an einzelne Treibereinheiten übermittelt und dort bzw. an den Halbleitertransistoren wird eine Stromänderung gemessen. Diese Stromänderung kann auch von den Treibereinheiten selbst gemessen und an die Verteileinheit zurückübermittelt werden. Die Laufzeit des Schaltsignals ergibt sich dann aus der zeitlichen Differenz zwischen dem Aussenden des Steuersignals und dem Zeitpunkt, an dem eine erwartete Stromänderung eintritt.

Ein entsprechendes Kalibrierverfahren wird eigenständig von der Stromrichteranordnung und ohne manuelle Aktivierung durchgeführt. Beispielsweise kann das Kalibrierverfahren in regelmäßigen Abständen und/oder vor einer Auslieferung durchgeführt werden. In dem Kalibrierverfahren werden dann die Treibereinheiten z.B. nacheinander angesteuert und, wie vorstehend geschildert, werden die sich dabei einstellenden Stromänderungen erfasst. Die Signallaufzeiten werden gespeichert und hinterlegt, insbesondere als eine Kalibrierdatei, und die zukünftige Verteilung der Steuersignale und das Ausgeben an die Treibereinheiten (insbesondere der Ausgabezeitpunkt) wird auf Basis dieser Informationen angepasst.

Ferner kann vorgesehen sein, dass die Signalverteileinheit dazu eingerichtet ist, die verteilten Signale nach Maßgabe wenigstens eines Temperaturmesswerts anzupassen. Bevorzugt kann insbesondere ein Verlauf von Schaltkurven, die durch die Steuersignale z.B. in Form darin kodierter Schaltvorgänge vorgebbar sind, durch die Signalverteileinheit temperaturabhängig angepasst werden. Hierbei kann es bevorzugt sein, zum Schutz der Halbleitertransistoren bei tiefen Temperaturmesswerten (z.B. bei weniger als 10° C oder allgemein unterhalb eines Mindestgrenzwerts) die Schaltkurven zu verlangsamen (z.B. durch Verringern eines Anstiegs der Schaltkurven). Bei hohen Temperaturen von z.B. über 60° C (oder allgemein oberhalb eines Maximalgrenzwerts) können die Schaltkurve hingegen beschleunigt werden, beispielsweise durch entsprechendes Verändern eines Anstiegs der Schaltkurve zu höheren Werten. Die Temperaturmessungen können von den Treibereinheiten, den Halbleitertransistoren oder hiermit verbundenen gesonderten Temperaturmesseinheiten vorgenommen werden und die Temperaturmesswerte können an die Signalverteileinheit übermittelt werden.

Allgemein ist also vorgesehen, dass eine bidirektionale Signalübermittlung möglich ist, beispielsweise um Temperaturmesswerte von den Treibereinheiten an die Signalverteileinheit zu übermitteln. Auch das Übermitteln von Stromänderungssignalen im Rahmen des vorstehend erläuterten Kalibrierverfahrens kann eine entsprechend bidirektionale Signalübermittlung erfordern.

Die Signalverteileinheit kann gemäß den vorstehenden Varianten (aber auch unabhängig hiervon) also nicht nur eine Signalverteilung vornehmen, sondern auch Betriebszustände auswerten und erfassen (Temperaturmessung, Laufzeitunterschiede) und/oder Signalentschlüsselungen vornehmen (z.B. von gemäß Protokollen erstellter Eingangssignale). Hierfür kann die Signalverteileinheit über entsprechende Funktionalitäten verfügen, insbesondere über Rechenfunktionalitäten, was mittels herkömmlicher FPGAs erreicht werden kann. Beispielsweise kann die Signalverteileinheit einen Mikroprozessor umfassen, der Programmanweisungen zum Bereitstellen der beschriebenen Funktionen ausführen kann.

Eine Ausführungsform der Stromrichteranordnung und des Verfahrens sieht vor, dass die Signalverteileinheit auf einer ersten Leiterplatte angeordnet ist und die Treibereinheiten auf wenigstens einer zweiten Leiterplatte angeordnet sind. Insbesondere kann jede Treibereinheit an einer eigenen (zweiten) Leiterplatte angeordnet sein und diese Leiterplatte ist/sind vorzugsweise in der Nähe von oder auch direkt an einem zugeordneten Schaltmodul angeordnet (beispielsweise direkt daran befestigt). Die Leiterplatte(n) der Treibereinheiten und die Leiterplatte der Signalverteileinheit können signalleitend miteinander verbunden sein, beispielsweise über Steckkontakte. In der Leiterplatte der Signalverteileinheit können Leitungsbahnen definiert sein, um eine Signalverteilung an jede der Treibereinheiten bzw. deren Leiterplatte(n) vornehmen zu können.

Das Ausbilden an unterschiedlichen Leiterplatten hat den Vorteil, dass die Treibereinheiten und/oder deren Leiterplatte(n) für konkret verwendete Schaltmodule optimiert werden können und die erste Leiterplatte hingegen für die Signalverteilung und die Signalverteileinheit geeignet ausgebildet werden kann. Zudem bietet sich auch die Möglichkeit zu einer platzsparenden, da z.B. zumindest teilweise überlappende Anordnung der Leiterplatten.

Beispielsweise kann in diesem Zusammenhang nämlich vorgesehen sein, dass die erste Leiterplatte und die wenigstens eine zweite Leiterplatte einander zumindest teilweise überdecken oder, mit anderen Worten, einander zumindest teilweise überlappen. Anders ausgedrückt können die Leiterplatten übereinander angeordnet werden und vorzugsweise zumindest teilweise kongruent übereinander angeordnet werden. Insbesondere kann die Leiterplatte der Signalverteileinheit gegenüberliegend zu einer Oberseite der Schaltmodule bzw. von an dieser Oberseite angeordneten Leiterplatten der Treibereinheiten positioniert sein. Bei dieser Oberseite kann es sich um die in Fig. 2 dem Betrachter zugewandte Seite umfassend die verschiedenen Anschlussöffnungen 16 handeln. Die erste und wenigstens eine zweite Leiterplatte können sich in zueinander parallelen Ebenen erstrecken. Auch die Schaltmodule oder zumindest einer Ober- und/oder Unterseite hiervon können sich parallel zu dieser Ebene erstrecken.

Ein entsprechendes Verfahren wird im unabhängigen Verfahrensanspruch 8 definiert.

Anders ausgedrückt kann im Rahmen des Konfigurierens eine Kombination ausgewählt und dadurch festgelegt werden, an die die Signalverteileinheit gleichartige Steuersignale verteilen soll. Es besteht aber die Möglichkeit, auch andere Kombinationen von Treibereinheiten auszuwählen bzw. die Signalverteileinheit ist dazu in der Lage, auch an entsprechend andere Kombinationen gleichartige Steuersignale zu verteilen, wenn sie entsprechend konfiguriert wird. Zusammengefasst umfasst das Konfigurieren also eine Festlegung, an welche Kombination von Treibereinheiten (insbesondere an welche Kombination aus einer Mehrzahl prinzipiell möglicher Kombinationen) die Verteilung gleichartiger Steuersignale erfolgen soll.

Analog zur Diskussion der vorstehenden Stromrichteranordnung können somit einzelne der Treibereinheiten für eine gemeinsame Ansteuerung parallelgeschaltet werden, während andere Kombinationen andere Steuersignale erhalten können.

Insbesondere kann das Konfigurieren der Signalverteileinheit in Abhängigkeit von wenigstens einem Parameter der Stromrichteranordnung (z.B. von deren Halbleitertransistoren) erfolgen und/oder das Anpassen einer Steuerkennlinie umfassen. Letztere kann zum Ansteuern einer oder mehrerer Treibereinheiten (von z.B. einer parallelgeschalteten Modul-Kombination) verwendet werden, beispielsweise um die Steuersignale zum Umsetzten eines gewünschten Schaltbefehls geeignet anzupassen. Insbesondere kann als Paramater z.B. zum Anpassen/Konfigurieren einer Steuerkennlinie die Anzahl parallelgeschalteter Module betrachtet werden. Ebenso kann die Steuerkennlinie an erwartete und/oder vorherrschende Temperaturen angepasst werden. Im Folgenden wird eine Ausführungsform der Erfindung anhand der beigefügten schematischen Figuren erläutert. In ihrer Art und/oder Funktion übereinstimmende Merkmale können dabei mit den gleichen Bezugszeichen versehen sein. Es stellen dar:
- Fig. 1: eine schematische Darstellung einer Stromrichteranordnung gemäß einem Ausführungsbeispiel der Erfindung;
- Fig. 2: eine perspektivische Darstellung eines Halbbrückenmoduls gemäß dem Stand der Technik;
- Fig. 3: eine perspektivische Darstellung einer Stromrichteranordnung gemäß einem zweiten Ausführungsbeispiel der Erfindung; und
- Fig. 4 und 5: Darstellungen einer Stromrichteranordnung gemäß einem dritten Ausführungsbeispiel der Erfindung in unterschiedlichen Zusammenbaustadien.

In Fig. 1 ist eine Stromrichteranordnung 1 gemäß einem ersten Ausführungsbeispiel der Erfindung gezeigt. Dabei zeigt der obere Teil von Fig. 1 die Stromrichteranordnung 1, während die unten im Bereich B von Fig. 1 gezeigten quer verlaufenden Balken Möglichkeiten andeuten, wie die nachstehend erläuterten einzelnen Halbbrückenmodule 10 parallelgeschaltet bzw. parallel angesteuert werden können. Die Halbbrückenmodule 10 sind Beispiele für erfindungsgemäße (Halbleiter-) Schaltmodule.

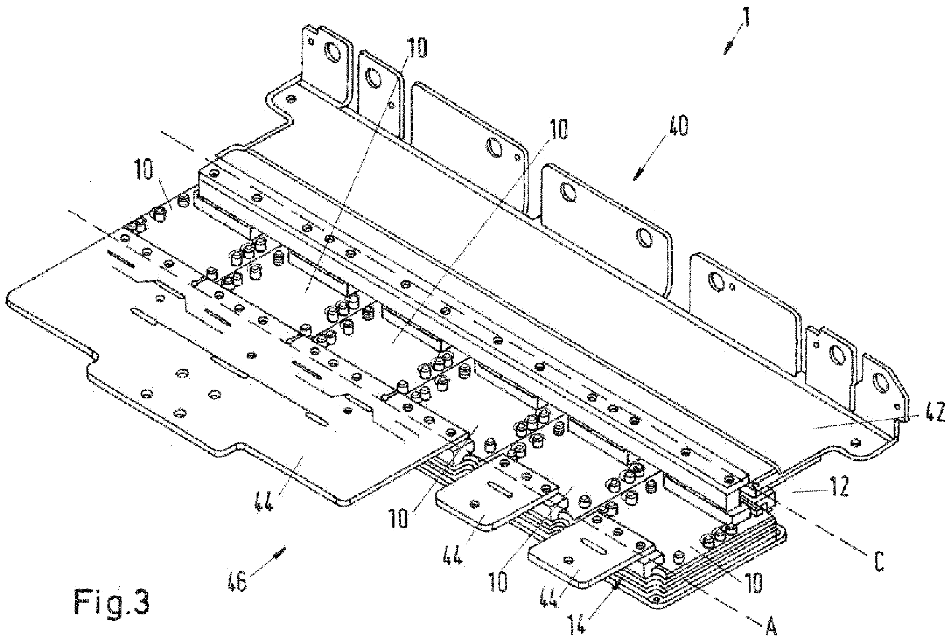

Zu beachten ist, dass entgegen der lediglich schematischen Darstellung in Fig. 1 insbesondere nachstehend erläuterte Leiterplatten nicht notwendigerweise nebeneinander, sondern auch übereinander positioniert sein können. Dies wird nachstehend anhand der Figuren 3 bis 5 detailliert erläutert.

Die Stromrichteranordnung 1 umfasst eine erste Leiterplatte 20. Auf dieser ist eine Signalverteileinheit 22 angeordnet, die bevorzugt als FPGA oder alternativ als ein programmierbarer Multiplexer ausgebildet ist. Die Signalverteileinheit 22 weist im gezeigten Fall lediglich einen Eingangskanal 52 auf. Über diesen kann sie gemäß dem dargestellten Eingangspfeil 52 ein (Eingangs-) Signal empfangen, das gemäß einem vorbestimmten Signalprotokoll definiert ist und das insbesondere ein Lichtwellensignal sein kann. Es wäre aber auch möglich, mehrere Eingangskanäle vorzusehen und insbesondere je nachstehend erläuterter Treiberschaltung 30 einen einzelnen Eingangskanal vorzusehen. Entsprechende Varianten werden nachstehend noch näher erläutert.

Das Eingangssignal wird von einer Signalerzeugungseinheit 24 erzeugt, die vorzugsweise kein Bestandteil der Stromrichteranordnung 1 ist, aber erfindungsgemäß ebenso ein Bestandteil dieser Stromrichteranordnung 1 sein könnte.

Die Signalverteileinheit 22 weist eine Mehrzahl von Ausgangskanälen bzw. Signalleitungen 27 auf. In dem gezeigten Beispiel entspricht die Anzahl der Signalleitungen 27 der Anzahl der nachstehend erläuterten Treiberschaltungen 30. In Fig. 1 sind jedoch nicht zwölf einzelne Signalleitungen 27 gezeigt, sondern einzelne mehrsträngige Leitungsgruppen, die lediglich als eine einzelne Linie dargestellt sind. Die mit einem Querstrich an den entsprechenden Leitungsgruppen markierten Zahlen geben die Anzahl von tatsächlich vorhandenen Leitungen in einer jeweiligen Leitungsgruppe an.

Allgemein kann je nachstehend erläuterter Treiberschaltung 30 wenigstens eine Leitung vorgesehen sein und sind bevorzugt jeweils zwei Leitungen für einen (gleichzeitigen) Signalaustausch in beiden Richtungen vorgesehen (zu und von einer Treiberschaltung 30).

Genauer gesagt sind in Fig. 1 zweimal sechs Signalleitungen 27 gezeigt, die sich unmittelbar an die Signalverteileinheit 22 anschließen und die sich jeweils in zwei Leitungsgruppen mit drei Einzelleitungen aufteilen. Punktförmig markiert sind Verzweigungspunkte, aus denen aus den aufgezweigten mehrsträngigen bzw. gebündelten Leitungsgruppen dann einzelne Signalleitungen 27 zu den jeweiligen Treiberschaltungen 30 abzweigen. Genauer gesagt ergeben sich im Anschluss an die sechsfach gebündelten Signalleitungen 27 der Signalverteileinheit 22 quer dargestellte jeweils dreisträngig verlaufende Leitungsgruppen, die nur durch eine Linie dargestellt sind, aber durch entsprechende Ziffern als dreisträngige Leitungsgruppe identifiziert werden. Zu den einzelnen Treiberschaltungen 30 führen dann aber nur einzelne Leitungen aus diesen mehrsträngigen Leistungsgruppen (jeweils ab punktförmigen Verzweigungen in Fig. 1).

Zu beachten ist, dass die Signalleitungen 27 ebenfalls zumindest anteilig auf der ersten Leiterplatte 20 ausgebildet sind, und zwar als galvanisch voneinander getrennte Leitungsbahnen. Dies verringert den Verkabelungsaufwand und allgemein den Herstellaufwand.

Weiter sind in Fig. 1 Halbbrückenmodule (Module) 10 gezeigt, die analog zu den aus Fig. 2 dargestellten bekannten Halbbrückenmodulen 10 ausgebildet sind. Aus Gründen der Übersichtlichkeit ist in Figur 1 jedoch keine Mehrzahl von etwaigen Verbindungsleitungen gezeigt, die mit der Mehrzahl von Aufnahmeöffnungen 16 in den jeweiligen Anschlussbereichen 12, 14 der Halbbrückenmodule 10 aus Figur 2 verbindbar sind.

Man erkennt, dass jedes Halbbrückenmodul 10 in seinem Innern zwei Halbleitertransistoren 26 aufweist, die beispielsweise als Silizium-IGBTs ausgebildet sind. Die Halbleitertransistoren 26 sind nach Art einer Halbbrücke geschaltet. Nicht dargestellt sind weitere mögliche innere Komponenten der Halbbrückenmodule 10, wie beispielsweise Widerstände oder zusätzliche innere Verbindungsleitungen.

Jedem Halbbrückenmodul 10 ist eine Treibereinheit 28 zugeordnet. Jede Treibereinheit 28 weist zwei Treiberschaltungen 30 auf. Diese sind mit jeweils einem der Halbleitertransistoren 26 elektrisch bzw. signalleitend verbunden und als an sich bekannte Gate-Ansteuerung bzw. Gate-Treiber für diese Halbleitertransistoren 26 ausgebildet. Aus Übersichtsgründen sind in Fig. 1 nicht sämtliche der Halbleitertransistoren 26 und Treiberschaltungen 30 mit einem entsprechenden Bezugszeichen versehen. Allerdings sind die Treiberschaltungen 30 wie auch allgemein die Treibereinheiten 28 und Halbbrückenmodule 10 identisch zueinander ausgebildet.

Die Treibereinheiten 28 sind jeweils an einer (zweiten bzw. zweiten Art von) individuell zugeordneten Leiterplatte 32 angeordnet (erneut nicht sämtliche hiervon in Fig. 1 mit einem entsprechenden Bezugszeichen versehen). Diese Leiterplatten 32 (eine je Treibereinheit 28) und genauer gesagt die darauf angeordneten Treiberschaltungen 30 sind signalleitend mit Signalleitungen 27 der ersten Leiterplatte 20 verbunden. Wie vorstehend geschildert, ist dabei jede der Treiberschaltungen 30 mit einer entsprechenden Signalleitung 27 signalleitend verbunden, wobei diese Verbindung z.B. über Steckkontakte oder dergleichen geschaffen werden kann.

Zusammengefasst erkennt man bei der Stromrichteranordnung 1 in Fig. 1, dass die Signalverteileinheit 22 Steuersignale über die Signalleitungen 27 an eine jede der Treibereinheiten 28 und auch jede der davon umfassten Treiberschaltungen 30 senden kann. Hierüber können die Treiberschaltungen 30 prinzipiell derart angesteuert werden, dass jeder der Halbleitertransistoren 26 individuell bzw. einzeln angesteuert werden kann. Ferner ist bevorzugt auch eine Rückmeldung (d.h. Signalübertragung) in umgekehrter Richtung von einer jeden Treiberschaltungen 30 an die Signalverteileinheit 22 über die Signalleitungen 27 möglich, z.B. über gesondert hierfür bereitgestellte Rückmelde-Signalleitungen.

In dem gezeigten Beispiel kann die Stromrichteranordnung 1 als Gleichrichter oder Wechselrichter betrieben werden. Die Halbbrückenmodule 10 sind deshalb derart ansteuerbar, dass diese über den in Fig. 1 nicht gezeigten ersten Anschlussbereich 12 zur Verfügung gestellte Gleichspannung in eine Wechselspannung umwandeln, die über den in Fig. 1 nur vereinfacht dargestellten zweiten Anschlussbereich 14 abgreifbar ist. Hierfür erhält die Signalverteileinheit 22 protokollierte (z.B. als Lichtwellenprotokoll und insbesondere seriell protokollierte) Schaltsignale. Die Signalverteileinheit 22 ist derart konfiguriert, dass sie die erhaltenen Schaltsignale an vorbestimmte Kombinationen aus den insgesamt sechs einzelnen Halbbrückenmodulen 10 bzw. deren zugeordnete Treibereinheiten 28 verteilt. Möglichkeiten der Kombination von Treibereinheiten 28 samt Halbleitermodulen 10 sind im Bereich B von Fig. 1 durch die einzelnen Balken angedeutet.

Genauer gesagt werden gemäß der Variante B1 die Halbbrückenmodule 10 jeweils einzeln angesteuert, sodass jedes der Halbbrückenmodule 10 einphasige Wechselspannung aus der anliegenden Gleichspannung generiert. Die Signalerzeugungseinheit 24 kann in diesem Fall z.B. lediglich eine Schaltfrequenz vorgeben, welche die Signalverteileinheit 22 an sämtliche Halbbrückenmodule 10 verteilt. Dies hat den Vorteil, dass lediglich ein Eingangskanal und eine Signalerzeugungseinheit 24 bereitgestellt werden muss, aber eine Mehrzahl von Halbbrückenmodulen 10 darauf basierend gesteuert werden kann. Alternativ können auch mehrere unabhängige (insbesondere Halbbrückenmodul-spezifische) Funktionen durch Ausgabe mehrerer unterschiedlicher Schaltfrequenzen realisiert werden.

Gemäß der Variante B2 sind jeweils zwei benachbarte Halbbrückenmodule 10 parallelgeschaltet. Dies wird durch die querverlaufenden Balken dargestellt, die sich über zwei Wechselspannungsanschlussbereiche 14 der entsprechend benachbarten Halbbrückenmodule 10 erstrecken. Es werden also drei Kombinationen von Halbbrückenmodulen 10 gebildet, was gleichbedeutend mit dem Bilden von drei Kombinationen von Treibereinheiten 28 bzw. deren Treiberschaltungen 30 ist, die parallel zueinander angesteuert werden sollen. Die Signalverteileinheit 22 verteilt an die entsprechenden Komponenten einer jeden Kombination jeweils gleichartige Steuersignale. Bevorzugt werden die Kombinationen jeweils individuell angesteuert, d.h. die (von links nach rechts) erste Kombination erhält andere Steuersignale als die mittlere und als die dritte Kombination. Ferner kann die Signalerzeugungseinheit 24 für jede der Kombinationen z.B. in serieller Form Schaltsequenzen definieren und diese können dann von der Signalverteileinheit 22 an die einzelnen Kombinationen getrennt verteilt werden. Es könnten aber auch mehrere Signalerzeugungseinheit 24 an die Signalverteileinheit 22 angeschlossen werden und insbesondere eine je gebildeter Modul-Kombination.

Man beachte, dass dieser Wechsel von der Variante B1 zu B2 keinerlei HardwareAnpassungen erfordert, sondern lediglich eine Neuprogrammierung der Signalverteileinheit 22, die die bereitgestellten Steuersignale dann entsprechend verteilt.

In den Varianten B3 bis B5 sind weitere Möglichkeiten gezeigt, um Kombinationen aus den gezeigten Treibereinheiten 28 samt dazugehörigen Halbbrückenmodulen 10 zu bilden. Bei der Variante B3 sind die (von links nach rechts) ersten beiden Paare von benachbarten Treibereinheiten 28 und Halbbrückenmodulen 10 zu einer entsprechenden Kombination zusammengefasst, während die beiden letzten einzeln angesteuert werden. Im Fall von B4 wird eine Kombination aus vier Treibereinheiten 28 und dazugehörigen Halbbrückenmodulen 10 und eine aus zwei Treibereinheiten 28 gebildet (von links nach rechts: die ersten vier bilden eine Kombination und die letzten beiden eine weitere Kombination). Im Fall von B5 bilden drei benachbarte Treibereinheiten 28 und dazugehörige Halbbrückenmodule 10 jeweils eine Kombination, sodass insgesamt nur zwei Kombinationen vorliegen.

Ein allgemeiner Vorteil des wahlweisen Parallelschaltens oder auch einzelnen Betreibens der Module 10 ist, dass je nach Anwendungszweck unterschiedliche Verbraucher an die Stromrichteranordnung 1 angeschlossen werden können. Im Fall der Variante B4 kann über die vier zu einer Kombination zusammengefassten Treibereinheiten 28 und Halbbrückenmodule 10 eine entsprechend hohe einphasige Leistung an einen elektrischen Verbraucher bereitgestellt werden, während die weitere Kombination von lediglich zwei Treibereinheiten 28 und Halbbrückenmodulen 10 einen elektrischen Verbraucher mit einem geringeren Leistungsbedarf versorgen kann. Im Fall von B1 könnten sechs einzelne elektrische Verbraucher mit einem entsprechend geringen Energiebedarf getrennt versorgt werden. Die Signalverteileinheit 22 ermöglicht somit das bedarfsweise Konfigurieren der Stromrichteranordnung 1 für einen gewünschten Einsatzzweck, ohne dass Hardwareanpassungen erforderlich sind.

Es ist darauf hinzuweisen, dass auch bei einer optionalen Mehrzahl von Eingangskanälen der Signalverteileinheit 22 und insbesondere einem Eingangskanal je Treiberschaltung 30 (also in dem gezeigten Fall zwölf Eingangskanäle) Vorteile mittels der erfindungsgemäßen Stromrichteranordnung 1 erzielbar sind. Beispielsweise ermöglicht die erfindungsgemäße Stromrichteranordnung 1, dass auch eine Mehrzahl von Signalerzeugungseinheiten 24 anschließbar ist, beispielsweise über wenigstens einen zusätzlichen Eingangskanal. Die Signalverteileinheit 22 kann dann derart konfiguriert werden, dass eine Zuordnung dahingehend erfolgt, welche Steuersignale von welcher Signalerzeugungseinheit 24 an welche etwaigen Kombinationen von Halbbrückenmodulen 10 bzw. deren zugeordneten Treibereinheiten 28 verteilt werden soll. Auch dies erhöht die Flexibilität der Stromrichteranordnung 1.

Zudem bietet sich auch ein Vorteil dahingehend, dass in den Signalerzeugungseinheiten 24 (auch dann, wenn nur eine hiervon vorhanden ist) keine Informationen dahingehend hinterlegt werden müssen, welche Eingangsleitungen einer Signalerzeugungseinheit 24 mit welchen Signalleitungen 27 bzw. Treibereinheiten 28 verknüpft sind. Dies ist insbesondere dann relevant, wenn die Signalerzeugungseinheit 24 über keine entsprechende Möglichkeit zur Informationshinterlegung verfügt oder aus Kostengründen bewusst auf eine solche Möglichkeit verzichtet werden soll. Stattdessen können derartige Informationen bzw. Verknüpfungen von der Signalverteileinheit 22 berücksichtigt und hierüber festgelegt werden. Dies ermöglicht auch, dass die Stromrichteranordnung 1 als eine Nachrüstlösung bei bestehenden Signalerzeugungseinheiten 24 verwendet werden kann, die gegebenenfalls über keine Möglichkeit verfügen, ihr Ausgangssignal auf verschiedene Kanäle aufzuteilen und/oder eine solche Aufteilung flexibel festzulegen.

Insbesondere kann mittels der erfindungsgemäßen Stromrichteranordnung 1 aber vermieden werden, dass in Abhängigkeit eines gewünschten Anwendungsfalls gesonderte Verbindungen zwischen einer oder mehreren Signalerzeugungseinheit(en) 24 und den Treibereinheiten 28 hergestellt werden müssen. Stattdessen kann dies über die bereits vorhandenen und vorzugsweise stets gleich bleibenden Signalleitungen 27 und die daran angeschlossene Signalverteileinheit 22 flexibel konfiguriert werden.

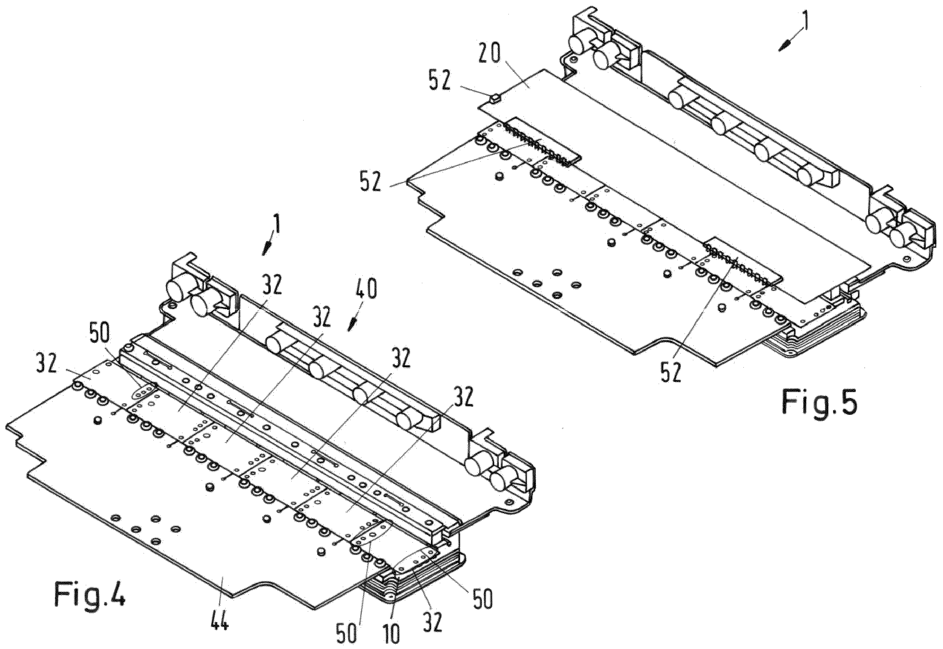

In Fig. 3 ist eine Ausführungsform der Erfindung in perspektivischer Darstellung gezeigt, die auf dem allgemeinen Prinzip aus Fig. 1 aufbaut. Bei dieser Stromrichteranordnung 1 sind nicht sämtliche Komponenten gezeigt und insbesondere nicht die erste Leiterplatte 20 sowie auch nicht die Leiterplatten 32 der Treibereinheiten 28. Deren Position verdeutlicht sich jedoch auch aus den nachstehenden Figuren 4 und 5.

Die Stromrichteranordnung 1 aus Fig. 3 kann wiederum als Gleichrichter oder als Wechselrichter betrieben werden. Man erkennt sechs Halbbrückenmodule 10 gemäß Fig. 2, die aneinandergereiht sind. Insbesondere sind diese in der Weise aneinandergereiht, dass sich deren Anschlussbereiche 14 für Wechselspannung auf einer ersten gemeinsamen Seite befinden (d.h. entlang einer ersten gemeinsamen Achse A angeordnet sind). Entsprechend sind die gegenüberliegend angeordneten Anschlussbereiche 12 für Gleichspannung entlang einer zweiten Achse C angeordnet, die sich parallel zur Achse A erstreckt. An den Anschlussbereichen 12 für Gleichspannung der Halbbrückenmodule 10 ist ein Gleichspannungsanschlussbereich 40 der Stromrichteranordnung 1 angeschlossen. Dieser umfasst ein leistenförmiges Anschlussbauteil 42, das an zu den Aufnahmeöffnungen 16 der Module 10 (siehe Fig. 2) korrespondierenden Positionen Steckverbinder umfasst. Das leistenförmige Bauteil 42 ermöglicht somit ein paralleles Anschließen sämtlicher Halbbrückenmodule 10 an eine Gleichspannungsquelle (nicht dargestellt).

Die Anschlussbereiche 14 für Wechselspannung der Halbbrückenmodule 10 sind hingegen mit plattenförmigen Anschlusselementen 44 verbunden. Diese plattenförmigen Anschlusselemente 44 sind von einem Wechselspannungsanschlussbereich 46 der Stromrichteranordnung 1 umfasst bzw. bilden diesen.

Hierbei erkennt man, dass sich die in Fig. 3 von links nach rechts ersten vier Halbbrückenmodule 10 ein plattenförmiges Anschlusselement 44 teilen bzw. jeweils mit dem gleichen plattenförmigen Anschlusselement 44 verbunden sind. Die letzten beiden Halbbrückenelemente 10 weisen ein eigenes plattenförmiges Anschlusselement 44 auf. Dies entspricht dem Fall B4 aus Fig. 1, mit der Ausnahme, dass der kürzere Balken dort analog zur Variante B3 in zwei einzelne Balken zu unterteilen wäre.

Anders ausgedrückt sind im Fall von Fig. 3 die ersten vier Halbbrückenmodule 10 parallelgeschaltet und erzeugen eine gleichartige einphasige Wechselspannung aus der bereitgestellten Gleichspannung. Infolge des Parallelschaltens liegt die erzeugte Wechselspannung auf einem entsprechend erhöhten Leistungsniveau. Die verbleibenden einzelnen Halbbrückenmodule 10 erzeugen hingegen jeweils eine vergleichsweise geringe einphasige Wechselspannung aus der zur Verfügung gestellten Gleichspannung. Die nicht dargestellte Signalverteileinheit 22 (siehe Fig. 1) ist folglich dazu eingerichtet, die ersten vier Halbbrückenmodule 10 mit gleichartigen Spannungssignalen in Form gleichartiger Schaltfrequenzen zu versorgen bzw. entsprechende gleichartige Steuersignale an die in Fig. 3 noch nicht dargestellten Treibereinheiten 28 zu verteilen. Die verbleibenden beiden Halbbrückenmodule 10 werden hingegen auf Basis anderer Steuersignale betrieben.

Anhand der Figuren 4 und 5 wird ein mit der Stromrichteranordnung aus Fig. 3 vergleichbarer Fall geschildert, wobei auch die Leiterplatten 32 und 20 aus Fig. 1 gezeigt sind. Der einzige wesentliche Unterschied zur Konfiguration aus Fig. 3 ist, dass in diesem Fall lediglich ein plattenförmiges Anschlusselement 44 vorhanden ist, das mit sämtlichen sechs Halbbrückenmodulen 10 ausgangsseitig (d.h. mit deren Anschlussbereichen 14 für Wechselspannung) verbunden ist und somit sämtliche sechs Halbbrückenmodule 10 parallelschaltet. Somit kann bei dieser Variante eine einphasige Wechselleistung oder ein einphasiger Wechselstrom auf einem besonders hohen Niveau erzeugt werden.

Die sechs aneinander gereihten Halbbrückenmodule 10 sind größtenteils verdeckt, jedoch analog zu Fig. 3 angeordnet. Gleiches gilt für den Gleichspannungsbereich 40 der Stromrichteranordnung 1, der identisch zu demjenigen aus Fig. 3 ausgebildet ist. Auf und somit oberhalb der Halbbrückenmodule 10 sind die Leiterplatten 32 positioniert. Man erkennt, dass jedem Halbbrückenmodul 10 eine entsprechende Leiterplatte 32 zugeordnet ist. Die Leiterplatten 32 sind dabei über lediglich angedeutete Anschlüsse 50 mit den korrespondierenden Anschlussbereichen 18 aus Fig. 2 der einzelnen Module 10 verbunden (nicht sämtliche entsprechenden Anschlüsse 50 sind in Fig. 4 mit einem entsprechenden Bezugszeichen versehen). Hierüber wird die auch aus Fig. 1 entnehmbare Verbindung zwischen den Treiberschaltungen 30 und den Halbleitertransistoren 26 geschaffen.

Nicht gesondert erkennbar in Fig. 4 sind eben diese Treiberschaltungen 30, die auf den einzelnen Leiterplatten 32 angeordnet sind. Wie erwähnt, können diese aber gemäß herkömmlicher Varianten und insbesondere als herkömmliche integrierte Schaltkreise ausgebildet sein.

In Fig. 5 ist zusätzlich die Leiterplatte 20 erkennbar, auf der die nicht gesondert dargestellte Signalverteileinheit 22 angeordnet ist und auf der die ebenfalls nicht gesondert dargestellten Signalleitungen 27 in Form von Leitungsbahnen ausgebildet sind. Nicht dargestellt ist ferner, dass (wie vorstehend erwähnt) die Leiterplatte 20 mit jeder der Leiterplatten 32 signalleitend verbunden ist. Dabei können an einer vom Betrachter abgewandten Unterseite der Leiterplatte 20 Steckverbinder vorgesehen sein, die mit den Anschlüssen 50 der Leiterplatten 32 aus Fig. 4 zusammenwirken können. Lediglich beispielhaft sind ferner Anschlüsse 52 der Leiterplatte 20 gezeigt, bei denen es sich um Anschlussbereiche handelt, die Steckverbinder zur Übertragung von elektrischen oder lichtbasierten Signalen von weiteren nicht dargestellter Komponenten (insbesondere von Signalerzeugungseinheiten 24) aufnehmen können.

Allgemein ist die Ausgestaltung entsprechender Anschlüsse 52 und auch deren Anzahl beliebig. Wie vorstehend gezeigt, kann rein zur Signalübermittlung lediglich ein entsprechender Anschluss 52 vorgesehen sein, der vorzugsweise das Anschließen eines Lichtleiters ermöglicht, um protokollierte und insbesondere seriell codierte Lichtpulssignale zu empfangen. Diese kann die in Fig. 5 nicht gezeigte Signalverteileinheit 20 dann in Steuersignale für die Treibereinheiten 28 (siehe Fig. 1) aufteilen und gemäß der festgelegten Konfiguration an diese verteilen. Es können aber auch mehrere entsprechende Anschlüsse 52 vorgesehen sein und insbesondere eine der Anzahl von Treiberschaltungen 30 entsprechende Anzahl von Anschlüssen 52.

Durch das Aufeinanderstapeln bzw. Übereinanderanordnen der Leiterplatten 20, der Treiber-Leiterplatten 32 und der Halbbrückenmodule 10 wird eine platzsparende Konfiguration ermöglicht. Aus Fig. 5 ergibt sich dabei unmittelbar, dass die erste Leiterplatte 20 mit der nicht dargestellten Signalverteileinheit 22 sämtliche Leiterplatten 32 überdeckt und in dem gezeigten Fall sogar im Wesentlich kongruent zu der von den Leiterplatten 32 aufgespannten Gesamtfläche ausgebildet ist, was jedoch lediglich optional ist. Weiter erkennt man, dass die Halbbrückenmodule 10 in einer gemeinsamen Ebene aneinandergereiht sind bzw. sich die Achsen A und C aus Fig. 3 in einer entsprechenden gemeinsamen Ebene erstrecken. Auch die Leiterplatten 32 und 20 erstrecken sich in bzw. parallel zu dieser Ebene. Allgemein ausgedrückt kann also vorgesehen sein, dass sich die erste Leiterplatte 20, die zweiten Leiterplatten 32 und die Halbbrückenmodule 10 jeweils in parallel zueinander verlaufenden Ebenen erstrecken, wobei dies in dem gezeigten Fall durch das Übereinanderstapeln bzw. einander Überdecken der genannten Komponenten erreicht wird.

Zurückkommend auf Fig. 1 soll abschließend noch auf weitere mit der gezeigten Stromrichteranordnung 1 erfindungsgemäß erzielbare Vorteile eingegangen werden.

Hierbei ist zunächst das Ausgleichen von Laufzeitunterschieden zu nennen, die entlang der einzelnen Signalleitungen 27 zwischen der Signalverteileinheit 22 und den Treiberschaltungen 30 auftreten können. Beispielsweise sind die in Fig. 1 von links nach rechts dritten und vierten Treiberschaltungen 30 deutlich näher an der Signalverteileinheit 22 und somit über kürzere Leitungsbahnlängen hiermit verbunden als die jeweils ganz äußeren (also ersten und sechsten) Treiberschaltungen 30. Sollen aber entsprechend gleich positionierte Treiberschaltungen 30 bzw. Module 10 kombiniert und dadurch parallelgeschaltet werden (siehe z.B. den Fall in Fig. 4) ist es bevorzugt, dass sämtliche Treiberschaltungen 30 tatsächlich auch parallel angesteuert werden, um einen möglichst identischen und insbesondere zeitgleichen Wechselrichtereffekt bereitstellen zu können.

Entsprechend ist vorgesehen, dass die Signalverteileinheit 22 auf Kalibrierinformationen zurückgreifen kann. Diese können z.B. in einer nicht gesondert dargestellten Speichereinrichtung der Signalverteileinheit 22 hinterlegt sein. Diese Kalibrierinformationen können die Laufzeiten zu den einzelnen Treibereinheiten 28 bzw. Treiberschaltungen 30 angeben.

Soll also ein Steuersignal an eine Treibereinheit 28 verteilt werden, ermittelt die Signalverteileinheit 22 die Laufzeiten zu sämtlich kombinierten bzw. parallelgeschalteten Treibereinheiten 28 und passt dann unter Berücksichtigung der Unterschiede dieser Laufzeiten die Verteilzeitpunkte oder, mit anderen Worten, Aussendezeitpunkte der Steuersignale geeignet an. Insbesondere können Steuersignale an Treibereinheiten mit vergleichsweise kurzen Laufzeiten im Vergleich zu Steuersignalen verzögert ausgesendet werden, die an Treibereinheiten 28 gesendet werden, die eine vergleichsweise große Laufzeit aufweisen bzw. benötigen. Die einzelnen Verteil- bzw. Aussendezeitpunkte der Steuersignale können dabei insbesondere anhand der Differenzen zwischen den Laufzeiten der parallelgeschalteten Treibereinheiten 28 definiert werden.

Zum Ermitteln der Laufzeiten ist gemäß einem Kalibrierbetrieb der Stromrichteranordnung 1 vorgesehen, dass die Signalverteileinheit 22 Steuersignale an einzelne Treibereinheiten 28 und/oder einzelne Treiberschaltungen 30 aussendet und ein Stromänderungssignal empfängt. Hierfür sind die Signalleitungen 27 zwischen der Signalverteileinheit 22 und den Treibereinheiten 28 bidirektional ausgebildet und die Kanäle bzw. Anschlüsse der Signalverteileinheit 22, die mit den entsprechenden Signalleitungen 27 verbunden sind, können als kombinierte Eingangs-Ausgangs-Kanäle ausgebildet sein.

Die Stromänderung bzw. das Stromänderungssignal kann z.B. wie folgt ermittelt werden: Durch Messen der Spannung über der Induktivität am Halbbrückenmodul zwischen einem Main-Emitter, der zwischen den beiden Halbeitertransistoren positioniert ist (z.B. zwischen einem oberen und unteren IGBT) und einem Hilfs-Emitter, der je Halbeitertransistor vorgesehen sein kann, kann ein Ansteigen des Stromes im Hauptstrompfad zwischen Kollektor und Emitter gemessen werden.

Es ist darauf hinzuweisen, dass gemäß dem dargestellten Doppelpfeil in Fig. 1 optional auch eine bidirektionale Signalübertragung zwischen der Signalverteileinheit 22 und der Signalerzeugungseinheit 24 vorgesehen sein kann. Hierüber können z.B. Empfangsbestätigungen von der Signalverteileinheit 22 an die Signalerzeugungseinheit 24 übermittelt werden, die bestätigen, dass und/oder welche Steuersignale erhalten wurden. Diese Empfangsbestätigungen können in bekannter Weise Prüfsummen enthalten oder als solche definiert sein.

Als ein weiterer erzielbarer Vorteil können optionale Temperaturmessungen von der Signalverteileinheit 22 berücksichtigt werden. Insbesondere können Temperaturen der Module 10 bzw. der darin vorhandenen Halbleitertransistoren 26 durch die Treibereinheit 28 erfasst und vorzugsweise per bidirektionaler Signalübertragung über die Signalleitungen 27 an die Signalverteileinheit 22 übermittelt werden. Stellt diese eine Temperatur oberhalb eines zulässigen Maximalwerts fest, kann sie das Aussenden von Steuersignalen unterbinden. Alternativ kann sie die hiervon definierten Schaltfrequenz höher wählen, als wenn Temperaturen unterhalb dieses Maximalwerts gemessen werden. Zusätzlich oder alternativ können ab Unterschreiten eines Mindestwertes der Temperatur das Aussenden der Steuersignale beendet und/oder bzw. die hiervon definierte Schaltfrequenz verlangsamt werden. Die Temperatur kann im Bereich der Anschlüsse 50 durch die Treibereinheit erkannt und insbesondere gemessen werden.

Es versteht sich, dass die vorstehend geschilderten zusätzlichen Varianten zur Berücksichtigung von Laufzeitunterschieden und Temperaturmessungen nicht auf die vorliegenden Ausführungsbeispiele beschränkt sind und auch unabhängig von den damit zusammenhängenden Details, wie sie insbesondere in den Figuren 1 bis 5 gezeigt sind, beansprucht werden können.

Abschließend soll anhand der Figuren 4 und 5 noch einmal auf die Unterschiede zu den einleitend geschilderten, bisher verwendeten zentralen und verteilten Ansätzen zum Betreiben von Treibereinheiten eingegangen werden. Bei dem verteilten Ansatz würde die Konfiguration im Wesentlichen derjenigen von Fig. 4 entsprechen, ohne dass eine Signalverteileinheit 22 mittels der weiteren Leiterplatte 20 aus Fig. 5 ergänzt werden würde. Es müsste dann also zwischen einer Signalerzeugungseinheit 24 und den einzelnen Treibereinheiten 28 der Leiterplatten 32 wenigstens eine weitere Leiterplatte positioniert werden, die je nach den gewünschten Parallelschaltungen zu konfigurieren wäre und die daher unflexibel ist. Insbesondere müssten je nach den gewünschten Parallelschaltungen gesonderte Speise- und Kommunikationseinheiten für jede der parallelgeschalteten Gruppen bzw. Kombinationen vorgesehen werden. Dies erhöht zusätzlich die Kosten.

Hingegen würden beim zentralen Ansatz keine einzelnen Leiterplatten 32 vorgesehen sein, sondern lediglich eine einzelne Leiterplatte, wie z.B. die Leiterplatte 20 aus Fig. 5, bei der jedoch die Signalverteileinheit 22 durch eine zentrale Treiberschaltung ersetzt wäre. Würde man hier aber die Anzahl an parallelgeschalteten Modulen 10 ändern, müsste man umgehend eine neue und gesondert angefertigte Leiterplatte für die zentrale Treibereinheit anfertigen. Unter Umständen müsste auch je gewählter Modul-Parallelschaltung eine gesonderte zentrale Treibereinheit vorgesehen werden. Aufgrund des möglichen Einsatzspektrums müssten daher je nach gewünschter Konfiguration gesonderte (zentrale) Treibereinheiten ausgewählt werden, was die vorrätig zu haltende Anzahl unterschiedlicher Treibereinheiten erhöht. Alternativ müsste eine Art Universal-Treibereinheit verwendet werden, die für einen konkreten Einsatzzweck (bzw. eine konkrete Anzahl zu versorgender Module 10) erwartungsgemäß keine optimalen Eigenschaften besitzt.

Derartige Nachteile können durch die erfindungsgemäße flexible Konfigurierbarkeit vermieden werden.

## Patentansprüche

1. Flexibel konfigurierbare, als Wechselrichter betreibbare Stromrichteranordnung (1), mit:
- einer Mehrzahl von Schaltmodulen (10), die Halbbrückenmodule sind und jeweils eine Mehrzahl von Halbleitertransistoren (26) umfassen;
- einer Treibereinheit (28) für jedes der Schaltmodule (10);
- einer Signalverteileinheit (22), die dazu eingerichtet ist, gesteuert durch von wenigstens einer Steuersignalerzeugungseinheit (24) empfangene Eingangssignale, Steuersignale an jede der Treibereinheiten (28) über Signalleitungen (27) zu verteilen;
wobei die Verteilung der Steuersignale durch die Signalverteileinheit (22) flexibel konfigurierbar ist, so dass verschiedene Kombinationen von Treibereinheiten (28) festlegbar sind, an die zum Erzielen synchroner Schaltvorgänge dienende Steuersignale verteilbar sind,
wobei die Signalverteileinheit (22) zum Festlegen einer jeweiligen Kombination programmierbar ist und wobei die Programmierung definiert, über welche Signalleitungen (27) welche Steuersignale und vor allem zum Erzielen synchroner Schaltvorgänge dienende Steuersignale zu übermitteln sind,
wobei die Stromrichteranordnung (1) derart umkonfigurierbar ist, dass in verschiedenen Konfigurationszuständen von Wechselrichterbetriebsweisen eine jeweils verschiedene Anzahl der Schaltmodule (10) wechselspannungsseitig parallelgeschaltet sind und dass gemäß einer dem Konfigurationszustand entsprechenden Programmierung der Signalverteileinheit (22) Halbleitertransistoren (26) der parallelgeschalteten Schaltmodule (10) jeweils zum synchronen Ein- und Ausschalten gesteuert werden und auf diese Weise eine Gleichspannung in eine Wechselspannung umwandeln, wobei die Signalverteileinheit (22) als die Eingangssignale erhaltene Schaltsignale entsprechend dem Konfigurationszustand an die jeweilige der Parallelschaltung der parallelgeschalteten Schaltmodule (10) entsprechende Kombination aus den Treibereinheiten (28) der Schaltmodule (10) verteilt,
wobei die Signalverteileinheit (22) dazu eingerichtet ist, bei dem Verteilen der Steuersignale eine Signallaufzeit zwischen der Signalverteileinheit (22) und den Treibereinheiten (28) zu berücksichtigen, so dass gleichartige Steuersignale an parallelgeschaltete Treibereinheiten (28) zeitversetzt versendet werden können, um in Parallelschaltungen ein zeitgleiches Schalten der Halbleitertransistoren (26) auf der Leistungsseite zu erreichen,
und
die Stromrichteranordnung (1), bzw. die Signalverteileinheit (22) dazu eingerichtet ist, eigenständig ein Kalibrierverfahren durchzuführen, wobei die Treibereinheiten (28) nacheinander angesteuert werden, die sich dabei einstellenden Stromänderungen erfasst werden und die Signallaufzeiten der Schaltsignale als zeitliche Differenzen zwischen dem Aussenden der Steuersignale und den Zeitpunkten der erwarteten Stromänderungen ermittelt und hinterlegt werden.

2. Stromrichteranordnung (1) nach Anspruch 1,
wobei die Stromrichteranordnung (1) einen Gleichspannungsanschlussbereich (40) und einen Wechselspannungsanschlussbereich (42) umfasst; und
die Schaltmodule (10) jeweils über einen ersten Anschlussbereich (12, 14) mit einem von Gleichspannungsanschlussbereich (40) und Wechselspannungsanschlussbereich (42) elektrisch verbunden sind; und
über einen zweiten Anschlussbereich (12,14) jeweils mit dem entsprechend anderen von Gleichspannungsanschlussbereich (40) und Wechselspannungsanschlussbereich (42) elektrisch verbunden sind.

3. Stromrichteranordnung (10) nach Anspruch 1 oder 2,
wobei die Signalverteileinheit (22) dazu eingerichtet ist, die verteilten Signale nach Maßgabe wenigstens eines Temperaturmesswerts anzupassen.

4. Stromrichteranordnung (10) nach einem der vorangehenden Ansprüche,
wobei die Signalverteileinheit (22) auf einer ersten Leiterplatte (20) angeordnet ist und die Treibereinheiten (28) auf wenigstens einer zweiten Leiterplatte (32) angeordnet sind.

5. Stromrichteranordnung (10) nach Anspruch 4,
wobei die erste Leiterplatte (20) und die wenigstens eine zweite Leiterplatte (32) einander zumindest teilweise überdecken.

6. Stromrichteranordnung (10) nach Anspruch 1,
wobei jede Treibereinheit (28) je Halbleitertransistor (26) eines Halbrückenmoduls eine Treiberschaltung (30) aufweist, die dazu eingerichtet ist, eine Gate-Ansteuerung eines zugeordneten Halbleitertransistors (26) vorzunehmen.

7. Stromrichteranordnung (10) nach einem der vorangehenden Ansprüche, wobei die Schaltmodule (10) einer Kombination ausgangsseitig parallelgeschaltet sind und/oder wobei die erzeugten Spannungen der Kombinationen aus Schaltmodulen (10) mit gleichartig angesteuerten Treibereinheiten (28) voneinander abweichen.

8. Verfahren zum Konfigurieren einer als Wechselrichter betreibbaren Stromrichteranordnung (1), wobei die Stromrichteranordnung (1) aufweist:
- eine Mehrzahl von Schaltmodulen (10), die Halbbrückenmodule sind und die jeweils eine Mehrzahl von Halbleitertransistoren (26) umfassen;
- eine Treibereinheit (28) für jedes der Schaltmodule (10);
- eine Signalverteileinheit (22), die dazu eingerichtet ist, gesteuert durch von wenigstens einer Steuersignalerzeugungseinheit (24) empfangene Eingangssignale, Steuersignale an die Treibereinheiten (28) über Signalleitungen (27) zu verteilen; und
wobei das Verfahren umfasst:
- Konfigurieren durch Programmieren der Signalverteileinheit (22), so dass diese an jeweils eine aus einer Mehrzahl möglicher Kombinationen von Treibereinheiten (28) zum Erzielen synchroner Schaltvorgänge dienende Steuersignale verteilen kann, wobei die Programmierung definiert, über welche Signalleitungen (27) bei der jeweiligen Kombination welche Steuersignale und vor allem zum Erzielen synchroner Schaltvorgänge dienende Steuersignale zu übermitteln sind.
- Umkonfigurieren der Stromrichteranordnung (1) in einen von mehreren verschiedenen Konfigurationszuständen von Wechselrichterbetriebsweisen, in denen eine jeweils verschiedene Anzahl der Schaltmodule (10) wechselspannungsseitig parallelgeschaltet sind und gemäß einer dem Konfigurationszustand entsprechenden Programmierung der Signalverteileinheit (22) Halbleitertransistoren (26) der parallelgeschalteten Schaltmodule (10) jeweils zum synchronen Ein- und Ausschalten gesteuert werden und auf diese Weise eine Gleichspannung in eine Wechselspannung umwandeln, wobei die Signalverteileinheit (22) als die Eingangssignale erhaltene Schaltsignale entsprechend dem Konfigurationszustand an die jeweilige der Parallelschaltung der parallelgeschalteten Schaltmodule (10) entsprechende Kombination aus den Treibereinheiten (28) der Schaltmodule (10) verteilt,
- Berücksichtigen einer Signallaufzeit zwischen der Signalverteileinheit und den Treibereinheiten (28) bei dem Verteilen der Steuersignale, so dass gleichartige Steuersignale an parallelgeschaltete Treibereinheiten (28) zeitversetzt versendet werden können, um in Parallelschaltungen ein zeitgleiches Schalten der Halbleitertransistoren (26) auf der Leistungsseite zu erreichen, und
- eigenständiges Kalibrieren, wobei die Treibereinheiten (28) nacheinander angesteuert werden, die sich dabei einstellenden Stromänderungen erfasst werden und die Signallaufzeiten der Schaltsignale als zeitliche Differenzen zwischen dem Aussenden der Steuersignale und den Zeitpunkten der erwarteten Stromänderungen ermittelt und hinterlegt werden.

9. Verfahren nach Anspruch 8,
wobei das Konfigurieren der Signalverteileinheit (22) das Anpassen wenigstens einer Steuerkennlinie in Abhängigkeit von wenigstens einem Parameter der Stromrichteranordnung (1) umfasst.

## Claims

1. Flexibly configurable power converter arrangement (1) operable as an inverter, comprising:
- a plurality of switching modules (10) which are half-bridge modules and each comprise a plurality of semiconductor transistors (26);
- a driver unit (28) for each of the switching modules (10);
- a signal distribution unit (22) which is designed to distribute control signals to each of the driver units (28) via signal lines (27), controlled by input signals received from at least one control signal generation unit (24);
wherein the distribution of the control signals by the signal distribution unit (22) is flexibly configurable so that different combinations of driver units (28) can be specified to which control signals serving to achieve synchronous switching operations can be distributed, wherein the signal distribution unit (22) is programmable for defining a respective combination, and wherein the programming defines via which signal lines (27) which control signals, and in particular control signals serving to achieve synchronous switching operations, are to be transmitted.
wherein the power converter arrangement (1) can be reconfigured in such a way that, in different configuration states of inverter operating modes, a different number of switching modules (10) are connected in parallel on the AC voltage side and that, in accordance with programming of the signal distribution unit (22) corresponding to the configuration state, semiconductor transistors (26) of the parallel-connected switching modules (10) are controlled for synchronous switching on and off and in this way convert a direct voltage into an alternating voltage, wherein the signal distribution unit (22) distributes switching signals received as input signals to the respective combination of the driver units (28) of the switching modules (10) corresponding to the parallel connection of the parallel-connected switching modules (10),
wherein the signal distribution unit (22) is designed to take into account a signal propagation time between the signal distribution unit (22) and the driver units (28) when distributing the control signals, so that control signals of the same kind can be sent to parallel-connected driver units (28) with a time delay in order to achieve simultaneous switching of the semiconductor transistors (26) on the power side in parallel connections,
and
the power converter arrangement (1) or the signal distribution unit (22) is designed to independently perform a calibration procedure, whereby the driver units (28) are controlled one after the other, the resulting current changes are recorded, the signal propagation times of the switching signals are determined and stored as time differences between the transmission of the control signals and the times of the expected current changes.

2. Power converter arrangement (1) according to claim 1,
wherein the power converter arrangement (1) comprises a DC voltage connection area (40) and an AC voltage connection area (42); and
the switching modules (10) are each electrically connected via a first connection area (12, 14) to one of DC voltage connection area (40) and AC voltage connection area (42); and
are each electrically connected via a second connection area (12, 14) to the other of DC voltage connection area (40) and AC voltage connection area (42).

3. Power converter arrangement (10) according to claim 1 or 2,
wherein the signal distribution unit (22) is designed to adjust the distributed signals in accordance with at least one temperature measurement value.

4. Power converter arrangement (10) according to one of the preceding claims,
wherein the signal distribution unit (22) is arranged on a first printed circuit board (20) and the driver units (28) are arranged on at least one second printed circuit board (32).

5. Power converter arrangement (10) according to claim 4,
wherein the first printed circuit board (20) and the at least one second printed circuit board (32) at least partially overlap each other.

6. Power converter arrangement (10) according to claim 1,
wherein each driver unit (28) per semiconductor transistor (26) of a half-bridge module has a driver circuit (30) which is designed to control the gate of an associated semiconductor transistor (26).

7. Power converter arrangement (10) according to one of the preceding claims,
wherein the switching modules (10) of a combination are connected in parallel on the output side and/or wherein the voltages generated by the combinations of switching modules (10) with in the same manner controlled driver units (28) differ from one another.

8. Method for configuring a power converter arrangement (1) operable as an inverter, wherein the power converter arrangement (1) comprises:
- a plurality of switching modules (10) which are half-bridge modules and each comprise a plurality of semiconductor transistors (26);
- a driver unit (28) for each of the switching modules (10);
- a signal distribution unit (22) configured to distribute control signals to the driver units (28) via signal lines (27) controlled by input signals received from at least one control signal generation unit (24);
(27); and wherein the
method comprises:
- configuring, by programming, the signal distribution unit (22) so that it can distribute control signals in each case to one of a plurality of possible combinations of driver units (28) to achieve synchronous switching operations, wherein the programming defines which control signals, and in particular control signals serving to achieve synchronous switching operations, are to be transmitted via which signal lines (27) in the respective combination,
- reconfiguring the power converter arrangement (1) into one of several different configuration states of inverter operating modes, in which different numbers of switching modules (10) are connected in parallel on the AC voltage side and, in accordance with a programming of the signal distribution unit (22) corresponding to the configuration state, semiconductor transistors (26) of the parallel-connected switching modules (10) are each controlled for synchronous switching on and off and in this way convert a direct voltage into an alternating voltage, wherein the signal distribution unit (22) distributes switching signals, that are received as the input signals, to the respective combination of the driver units (28) of the switching modules (10) corresponding to the parallel connection of the parallel-connected switching modules (10) in accordance with the configuration state,
- taking into account a signal propagation delay between the signal distribution unit and the driver units (28) when distributing the control signals, so that control signals of the same kind can be sent to parallel-connected driver units (28) with a time delay in order to achieve simultaneous switching of the semiconductor transistors (26) on the power side in parallel connections, and
- independent calibration, wherein the driver units (28) are activated one after the other, the resulting current changes are detected, and the signal propagation times of the switching signals are determined and stored as time differences between the transmission of the control signals and the times of the expected current changes.

9. Method according to claim 8,
wherein the configuration of the signal distribution unit (22) comprises the adaptation of at least one control characteristic curve depending on at least one parameter of the power converter arrangement (1).

## Revendications

1. Dispositif convertisseur de courant (1) configurable de manière flexible, pouvant fonctionner comme onduleur, comprenant :
- une pluralité de modules de commutation (10) qui sont des modules demi-ponts et comprennent chacun une pluralité de transistors à semi-conducteur (26) ;
- une unité d'entraînement (28) pour chacun des modules de commutation (10) ;
- une unité de distribution de signaux (22) qui est conçue pour distribuer,
sous le contrôle de signaux d'entrée reçus par au moins une unité de génération de signaux de commande (24), des signaux de commande à chacune des unités d'entraînement (28) via des lignes de signaux (27) ;
la distribution des signaux de commande par l'unité de distribution de signaux (22) étant configurable de manière flexible, de sorte que différentes combinaisons d'unités d'entraînement (28) sont définissables, auxquelles des signaux de commande servant à obtenir des opérations de commutation synchrones peuvent être distribués,
l'unité de distribution de signaux (22) étant programmable pour définir une combinaison respective et la programmation définissant via quelles lignes de signaux, quels signaux de commande, et en particulier, des signaux de commande servant à obtenir des processus de commutation synchrones, doivent être transmis,
le dispositif convertisseur de courant (1) étant reconfigurable de telle sorte que, dans différents états de configuration de modes de fonctionnement d'un onduleur, un nombre respectivement différent de modules de commutation (10) est connecté en parallèle côté tension alternative et que, conformément à une programmation de l'unité de distribution de signaux (22) correspondant à l'état de configuration, des transistors à semi-conducteur (26) des modules de commutation (10) connectés en parallèle sont commandés respectivement pour la mise en marche et l'arrêt synchrones et convertissent ainsi une tension continue en une tension alternative, l'unité de distribution de signaux (22) distribuant des signaux de commutation reçus comme les signaux d'entrée en fonction de l'état de configuration à la combinaison respective des unités d'entraînement (28) des modules de commutation (10) correspondant au montage en parallèle des modules de commutation (10) montés en parallèle,
l'unité de distribution de signaux (22) étant conçue pour tenir compte, lors de la distribution des signaux de commande, d'un temps de propagation de signal entre l'unité de distribution de signaux (22) et les unités d'entraînement (28), de sorte que des signaux de commande de même type peuvent être envoyés de manière décalée dans le temps à des unités d'entraînement (28) connectées en parallèle afin d'obtenir une commutation simultanée des transistors à semi-conducteur (26) du côté puissance dans des montages en parallèle,
et
le dispositif convertisseur de courant (1) ou l'unité de distribution de signaux (22) est conçu/-e pour effectuer de manière autonome un processus de calibrage, les unités d'entraînement (28) étant commandées les unes après les autres, les variations de courant qui en résultent étant détectées et les temps de propagation des signaux de commutation sont déterminés et enregistrés sous forme de différences temporelles entre l'émission des signaux de commande et les instants des variations de courant attendues.

2. Dispositif convertisseur de courant (1) selon la revendication 1,
le dispositif convertisseur de courant (1) comprenant une zone de raccordement à tension continue (40) et une zone de raccordement à tension alternative (42) ; et
les modules de commutation (10) sont à chaque fois reliés électriquement, via une première zone de raccordement (12, 14), à l'une de la zone de raccordement à tension continue (40) et de la zone de raccordement à tension alternative (42) ; et
sont à chaque fois reliés électriquement, via une deuxième zone de raccordement (12, 14), à l'autre, respectivement, de la zone de raccordement à tension continue (40) et de la zone de raccordement à tension alternative (42).

3. Dispositif convertisseur de courant (10) selon la revendication 1 ou 2,
dans lequel l'unité de distribution de signaux (22) est conçue pour adapter les signaux distribués en fonction d'au moins une valeur de mesure de température.

4. Dispositif convertisseur de courant (10) selon l'une quelconque des revendications précédentes,
dans lequel l'unité de distribution de signaux (22) est disposée sur une première carte de circuit imprimé (20) et les unités d'entraînement (28) sont disposées sur au moins une deuxième carte de circuit imprimé (32).

5. Dispositif convertisseur de courant (10) selon la revendication 4,
la première carte de circuit imprimé (20) et la au moins une deuxième carte de circuit imprimé (32) se recouvrant au moins partiellement.

6. Dispositif convertisseur de courant (10) selon la revendication 1,
chaque unité d'entraînement (28) comportant, pour chaque transistor à semi-conducteur (26) d'un module demi-pont, un circuit d'entraînement (30) qui est conçu pour effectuer une commande de grille d'un transistor à semi-conducteur (26) associé.

7. Dispositif convertisseur de courant (10) selon l'une quelconque des revendications précédentes,
dans lequel les modules de commutation (10) d'une combinaison sont connectés en parallèle côté sortie et/ou dans lequel les tensions générées par les combinaisons de modules de commutation (10) avec des unités d'entraînement (28) commandées de manière similaire diffèrent les unes des autres.

8. Procédé pour configurer un dispositif convertisseur de courant (1) pouvant fonctionner comme onduleur, le dispositif convertisseur de courant (1) comportant :
- une pluralité de modules de commutation (10) qui sont des modules demi-ponts et qui comprennent chacun une pluralité de transistors à semi-conducteur (26) ;
- une unité d'entraînement (28) pour chacun des modules de commutation (10) ;
- une unité de distribution de signaux (22) qui est conçue pour distribuer, sous le contrôle de signaux d'entrée reçus d'au moins une unité de génération de signaux de commande (24), des signaux de commande aux unités d'entraînement (28) via des lignes de signaux
(27) ; et
le procédé comprenant :
- configurer, par programmation, l'unité de distribution de signaux (22) de manière à ce qu'elle peut distribuer respectivement à l'une d'une pluralité de combinaisons possibles d'unités d'entraînement (28) des signaux de commande servant à obtenir des processus de commutation synchrones, la programmation définissant via quelles lignes de signaux (27), dans la combinaison respective, quels signaux de commande, et en particulier, des signaux de commande servant à obtenir des processus de commutation synchrones, doivent être transmis,
- Reconfiguration du dispositif convertisseur de courant (1) dans l'un de plusieurs états de configuration différents de modes de fonctionnement d'un onduleur, dans lesquels un nombre respectivement différent de modules de commutation (10) sont connectés en parallèle côté tension alternative et, conformément à une programmation de l'unité de distribution de signaux (22) correspondant à l'état de configuration des transistors à semi-conducteur (26) des modules de commutation (10) connectés en parallèle sont commandés respectivement pour la mise en marche et l'arrêt synchrones et convertissent ainsi une tension continue en une tension alternative, dans lequel l'unité de distribution de signaux (22) distribue des signaux de commutation reçus comme les signaux d'entrée, en fonction de l'état de configuration, à la combinaison respective des unités d'entraînement (28) des modules de commutation (10) correspondant au montage en parallèle des modules de commutation (10) montés en parallèle,
- tenir compte d'un temps de propagation de signal entre l'unité de distribution de signaux et les unités d'entraînement (28) lors de la distribution des signaux de commande, de sorte que des signaux de commande de même type peuvent être envoyés de manière décalée dans le temps à des unités d'entraînement (28) connectées en parallèle afin d'obtenir une commutation simultanée des transistors à semi-conducteur (26) du côté puissance dans des montages en parallèle, et
- calibrage autonome, les unités d'entraînement (28) étant commandées les unes après les autres, les variations de courant qui en résultent étant détectées et les temps de propagation des signaux de commutation étant déterminés et enregistrés sous forme de différences temporelles entre l'émission des signaux de commande et les instants des variations de courant attendues.

9. Procédé selon la revendication 8,
la configuration de l'unité de distribution de signaux (22) comprenant l'adaptation d'au moins une courbe caractéristique de commande en fonction d'au moins un paramètre du dispositif convertisseur de courant (1).
